# EUROPEAN PATENT APPLICATION

(11) **EP 4 810 823 A1**
(43) Date of publication of application: **23.09.2026**
(21) Application number: 24891465.7
(22) Date of filing: 14.11.2024
(51) Int. Cl.: F16G 5/06, B29D 29/10, F16G 5/20

(54) **WRAPPED BANDED V-BELT AND METHOD FOR MANUFACTURING SAME**

(30) Priority: 16.11.2023 JP 2023195203; 01.11.2024 JP 2024193031
(71) Applicant: Mitsuboshi Belting Ltd., Kobe-shi, Hyogo 653-0024 (JP)
(72) Inventor: YOSHIMURA Kentaro, Kobe-shi, Hyogo 653-0024 (JP); TAKABA Susumu, Kobe-shi, Hyogo 653-0024 (JP)
(74) Representative: Hoffmann Eitle
(86) International application number: PCT/JP2024/040461
(87) International publication number: WO 2025/105429

(57) **Abstract**

The present invention relates to a wrapped banded V-belt including a plurality of wrapped V-belt portions in which a belt body portion is covered with an outer covering fabric, and a tie band for connecting the plurality of wrapped V-belt portions at the outer peripheral surfaces of the wrapped V-belt portions, wherein the outer peripheral surfaces of the wrapped V-belt portions each have a covered region covered with the outer covering fabric and an uncovered region that is not covered, the covering region is formed on at least one side portion of the outer peripheral surface, and the outer covering fabric that covers the covered region covers the side surfaces of the wrapped V-belt portions.

## Description

### TECHNICAL FIELD

The present invention relates to a wrapped joined V-belt in which a plurality of wrapped V-belt portions are connected in a width direction and a manufacturing method thereof.

### BACKGROUND ART

A frictional power-transmission belt such as a V-belt, a V-ribbed belt, and a flat belt is known as a power-transmission belt that transmits power. The V-belt includes a raw-edge type (raw-edge V-belt) that is a rubber layer in which a frictional power-transmission surface (V-shaped side surface) is exposed, and a wrapped type (wrapped V-belt) in which a frictional power-transmission surface is covered with a cover fabric. These V-belts are widely used in general industrial machines and agricultural machines.

In applications such as agricultural machines, a wrapped V-belt in which the entire belt surface including the frictional power-transmission surface is covered with a cover fabric over the entire circumference is used. The reason for this is that when a row-edge V-belt, which is a rubber layer having an exposed frictional power-transmission surface, is used, the friction factor of the power-transmission surface is high and the stress applied to the belt is large, leading to early cutting, and when the belt entangles a straw, stone, wood, or the like, there is a concern that the belt or the entire power-transmission system is damaged by a sudden impact applied to the power-transmission surface. By using the wrapped V-belt, the friction factor of the power-transmission surface is reduced, the belt slips appropriately, and the stress and impact applied to the belt are alleviated. In addition, the power-transmission surface is protected and hardly damaged.

In a large-sized agricultural machine used in a large-scale farm in Europe and the United States, it is necessary to transmit enormous amounts of power, and it is necessary to simultaneously use a plurality of V-belts. That is, it is necessary to wind the plurality of V-belts around pulleys of a belt power-transmission system in a state in which the plurality of V-belts are arranged in parallel (multiple winding belts), and cause the plurality of V-belts to rotate and run. However, when the plurality of V-belts are applied in parallel, there is a concern that a tension difference is generated between the plurality of parallel V-belts, and stable power-transmission is impaired. Furthermore, as a result of contact between adjacent V-belts, there is a concern that an inner peripheral side and an outer peripheral side of the belt are reversed to form a reverse structure (overturning).

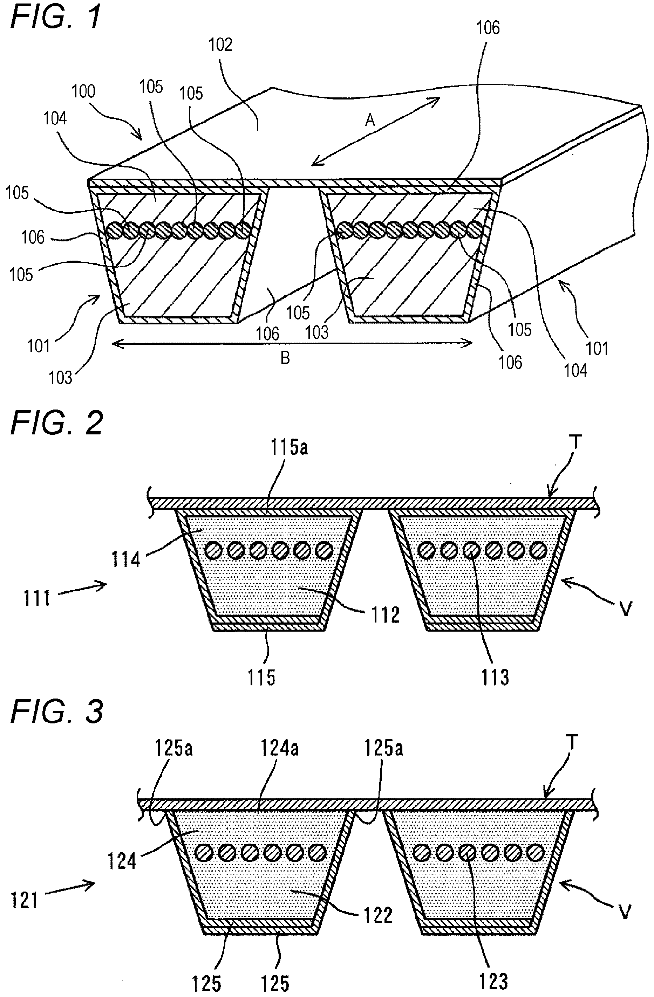

Therefore, in a case in which a plurality of V-belts are caused to run in parallel, a joint belt (joint V-belt) which is formed by connecting, in a belt width direction, a plurality of annular V-belt portions each having a configuration similar to that of the V-belt is used. The joint V-belt is implemented in a form in which a plurality of V-belt portions are connected or joined by a tie band (a joining member such as a fabric) in a state of being arranged in parallel. As the V-belt portion, a wrapped V-belt (wrapped V-belt portion) covered with a cover fabric may be used. A representative wrapped joined V-belt in which such wrapped V-belt portions are connected by a tie band (joining member) is illustrated in Fig. 1 as a schematic partial cross-sectional perspective view.

As illustrated in Fig. 1, a wrapped joined V-belt 100 includes two wrapped V-belts (wrapped V-belt portions) 101 arranged in parallel at an interval, and the two wrapped V-belts 101 are connected at their respective outer peripheral surfaces by a joining member (tie band) 102 formed of a fabric. Each wrapped V-belt 101 is formed of an endless belt main body (belt main body portion) formed of a tension rubber layer 104 on an outer peripheral side of the belt, a compression rubber layer 103 on an inner peripheral side of the belt, and tension members 105 embedded along a belt longitudinal direction (circumferential length direction, direction A in the drawing) between the tension rubber layer 104 and the compression rubber layer 103, and a cover fabric 106 (woven fabric, knitted fabric, nonwoven fabric, or the like) covering the periphery of the belt main body over the entire length in the belt circumferential direction. In this example, the tension member 105 is a cord (twisted cord) arranged at predetermined intervals in the belt width direction (direction B in the drawing), and is interposed between the tension rubber layer 104 and the compression rubber layer 103 in contact with both layers.

More specifically, a wrapped joined V-belt disclosed in Japanese Patent Publication No. 47-34432 (Patent Literature 1) is exemplified. Fig. 2 illustrates a schematic partial cross-sectional view (cross-sectional view perpendicular to a belt length direction) of a related wrapped joined V-belt as disclosed in Patent Literature 1.

In a related wrapped joined V-belt 111 illustrated in Fig. 2, a plurality of (two in the drawing) wrapped V-belt portions V arranged in parallel at intervals in the belt width direction (direction B in Fig. 1) are connected by a tie band (joining member) T, and each wrapped V-belt portion V includes an endless belt main body portion extending in a belt length direction (circumferential length direction, direction A in Fig. 1) having an inverted trapezoidal cross-sectional shape, and a cover fabric 115 covering the periphery of the belt main body portion, the belt main body portion having a laminated structure in which a compression rubber layer 112, tension members 113, and a tension rubber layer 114 are laminated in this order from an inner peripheral side toward an outer peripheral side of the belt. The cover fabric 115 is formed of a seamless (one continuous piece of) fabric, covers the entire surface of the belt main body portion (inner peripheral surface, both side surfaces, and outer peripheral surface of the belt), and the cover fabric 115 is overlapped on the inner peripheral side to form a two-layer structure.

However, such a related wrapped joined V-belt 111 has a problem that the wrapped V-belt portion V and the tie band T are prone to peeling. That is, in the wrapped V-belt portion V, the entire surface of the belt main body portion is covered with the cover fabric 115, and the wrapped V-belt portion V is joined or connected to the tie band T via a cover fabric 115a covering the outer peripheral surface side, and thus, in particular, in a case in which the tie band T is formed of a fabric or the like, this results in adhesion between fabrics, making it difficult to achieve strong joining or connection with a high adhesive force.

As a countermeasure, an attempt has been made to improve the adhesive force between the wrapped V-belt portion and the tie band by exposing a rubber layer from the outer peripheral surface (back surface) side of the wrapped V-belt portion. For example, JP2020-37257A (Patent Literature 2) describes that a rubber layer is exposed by cutting off, over a circumferential direction, a portion on an outer peripheral side of an unvulcanized rubber belt covered with a cover fabric, and in a vulcanization step, a reinforcing fabric (tie band) is disposed on the outer peripheral side in a state in which a plurality of the unvulcanized rubber belts in which the rubber layer is exposed are arranged in parallel and vulcanized, whereby the rubber layer exposed from the unvulcanized rubber belts and the reinforcing fabric (tie band) are joined by vulcanization, and thus the adhesive strength can be improved as compared with a related one in which the cover fabric and the reinforcing fabric (tie band) are adhered. In addition, JP2022-102656A (Patent Literature 3) describes a configuration in which an upper portion of an annular laminated structure (belt main body portion precursor) in a semi-vulcanized state is buffed with a grindstone or sandpaper to remove a reinforcing fabric (cover fabric) and expose the laminated structure in the semi-vulcanized state, a tie band is attached to an uneven surface of a plurality of annular laminated structures subjected to the buffing, and the plurality of annular laminated structures in the semi-vulcanized state to which the tie band is attached are completely vulcanized.

### CITATION LIST

### PATENT LITERATURE

Patent Literature 1: Japanese Patent Publication No. 47-34432
Patent Literature 2: JP2020-37257A
Patent Literature 3: JP2022-102656A

### SUMMARY OF INVENTION

### TECHNICAL PROBLEM

Fig. 3 illustrates a schematic partial cross-sectional view of the wrapped joined V-belts disclosed in Patent Literatures 2 and 3. A wrapped joined V-belt 121 illustrated in Fig. 3 is different from the wrapped joined V-belt 111 illustrated in Fig. 2 in that an outer peripheral surface side of a cover fabric 125 covering an entire surface of the wrapped V-belt portion V is cut or removed. That is, in the wrapped joined V-belt 121, each of a plurality of (two in the drawing) wrapped V-belt portions V arranged in parallel at intervals in the belt width direction includes a belt main body portion in which a compression rubber layer 122, tension members 123, and a tension rubber layer 124 are laminated in this order from an inner peripheral side toward an outer peripheral side of the belt, and the two-stage cover fabric 125 covering an inner peripheral surface and both side surfaces of the belt main body portion. The two-stage cover fabric 125 is overlapped on the inner peripheral side, but at the stage before the connection to the tie band T, the cover fabric 125 is formed of a seamless (one continuous piece of) fabric like the cover fabric 115 of the wrapped joined V-belt 111 illustrated in Fig. 2. That is, the cover fabric 125 is originally one continuous piece of fabric covering the periphery (the entire surface including the outer peripheral side) of the belt main body portion, but is divided into two by cutting off the outer peripheral surface side of the wrapped V-belt portion V. Since the tension rubber layer 124 is exposed by the cutting of the outer peripheral surface side and an exposed outer peripheral surface side surface 124a of the tension rubber layer 124 is in direct contact with the tie band T, the tension rubber layer 124 can be joined or connected to the tie band T with a high adhesive force by a vulcanization step.

However, in the manufacturing methods disclosed in Patent Literature 2 and Patent Literature 3, a step of covering the wrapped V-belt portion with the cover fabric and then exposing the rubber layer from the outer peripheral surface (back surface) side is necessary, and in Patent Literature 3, a step of bringing the wrapped V-belt portion into a semi-vulcanized state is also necessary, and thus, there is a disadvantage in terms of cost that the step is complicated and a material loss occurs. In addition, since the cover fabric is completely removed from the back surface of the wrapped V-belt portion, there is a structural defect that the cover fabric is easily peeled off at a boundary portion (125a in Fig. 3) with the tie band on the side surface of the wrapped V-belt portion.

Accordingly, an object of the present invention is to provide a wrapped joined V-belt and a manufacturing method thereof which can improve an adhesive force between a wrapped V-belt portion and a tie band, and can prevent peeling of a cover fabric at a boundary portion between a side surface of the wrapped V-belt portion and the tie band.

Another object of the present invention is to provide a wrapped joined V-belt and a manufacturing method thereof which can improve the adhesive force between the wrapped V-belt portion and the tie band and can improve productivity.

Still another object of the present invention is to provide a wrapped joined V-belt and a manufacturing method thereof which can improve the adhesive force between the wrapped V-belt portion and the tie band and can achieve excellent wear resistance and lateral pressure resistance.

Yet another object of the present invention is to provide a wrapped joined V-belt and a manufacturing method thereof which can prevent the peeling between the wrapped V-belt portion and the tie band and can achieve excellent durability (durable life).

### SOLUTION TO PROBLEM

As a result of intensive studies to achieve the above objects, the present inventors have found that when a covered area covered with a cover fabric and an uncovered area that is not covered are formed on an outer peripheral surface of a wrapped V-belt portion, and side portions of the outer peripheral surface are covered with the cover fabric covering a side surface of the wrapped V-belt portion to form the covered area (when covering is performed such that the cover fabric is folded from the side surface to the outer peripheral surface side), not only an adhesive force with a tie band can be effectively improved, but also peeling between the cover fabric and the tie band at a boundary portion can be prevented, and completed the present invention. That is, the present invention may include the following aspects and the like.

Aspect [1]: A wrapped joined V-belt including:
a plurality of wrapped V-belt portions each including a belt main body portion covered with a cover fabric, and
a tie band connecting the plurality of wrapped V-belt portions at an outer peripheral surface of each of the wrapped V-belt portions, in which
the outer peripheral surface of each of the wrapped V-belt portions includes a covered area that is covered with the cover fabric and an uncovered area that is not covered,
the covered area is formed on at least one side portion of the outer peripheral surface, and
the cover fabric covering the covered area also covers a side surface of each of the wrapped V-belt portions.

Aspect [2]: The wrapped joined V-belt according to aspect [1], in which
the covered area and the uncovered area are formed to extend in a belt length direction.

Aspect [3]: The wrapped joined V-belt according to aspect [1] or [2], in which
the covered area is formed on both side portions of the outer peripheral surface.

Aspect [4]: The wrapped joined V-belt according to any one of aspects [1] to [3], in which
an area ratio of the uncovered area with respect to an area of the outer peripheral surface of each of the wrapped V-belt portions is 25% to 95% (for example, 25% to 85%).

Aspect [5]: The wrapped joined V-belt according to any one of aspects [1] to [4], in which
the belt main body portion is covered with one layer to three layers of the cover fabric.

Aspect [6]: The wrapped joined V-belt according to any one of aspects [1] to [5], in which
the belt main body portion is covered with a plurality of layers of the cover fabric.

Aspect [7]: The wrapped joined V-belt according to any one of aspects [1] to [6], in which
the belt main body portion is covered with a plurality of layers of the cover fabric,
a first cover fabric positioned on an outermost side among the plurality of layers of the cover fabric forms the covered area on the outer peripheral surface (cover a partial area of the outer peripheral surface), and
one or a plurality of second cover fabrics positioned inside the first cover fabric do not cover the outer peripheral surface (not to form the covered area).

Aspect [8]: The wrapped joined V-belt according to any one of aspects [1] to [7], in which
the tie band includes a fiber.

Aspect [9]: A manufacturing method of the wrapped joined V-belt according to any one of aspects [1] to [8], the method including:
a covering step of covering a belt main body portion precursor with a cover fabric precursor to form a wrapped V-belt portion precursor, and
a connecting step of connecting outer peripheral surfaces of a plurality of the wrapped V-belt portion precursors obtained in the covering step with a tie band precursor, wherein
in the covering step, an inner peripheral surface and both side surfaces of each of the belt main body portion precursors are covered, at least one side portion of the outer peripheral surface is covered with the cover fabric precursor covering the side surface, and a partial area of the outer peripheral surface is not covered.

Aspect [10]: The manufacturing method according to aspect [9], in which
the manufacturing method does not include a removal step of cutting or removing the cover fabric precursor covering an outer peripheral surface side of each of the wrapped V-belt portion precursors obtained in the covering step.

Aspect [11]: The manufacturing method according to aspect [9] or [10], in which
in the covering step, a width of the cover fabric precursor is shorter than a perimeter length of a cross-sectional shape perpendicular to a length direction of the belt main body portion precursor, and covering is performed such that a width direction of the cover fabric precursor is directed in a direction perpendicular to a belt length direction.

Aspect [12]: The manufacturing method according to any one of aspects [9] to [11], in which
in the covering step, the inner peripheral surface, the both side surfaces, and at least one side portion of the outer peripheral surface of the belt main body portion precursor are at least covered with a seamless (one continuous piece of) cover fabric precursor.

### ADVANTAGEOUS EFFECTS OF INVENTION

According to the present invention, in the outer peripheral surface of the wrapped V-belt portion, the covered area covered with the cover fabric and the uncovered area that is not covered are formed, and at least one side portion of the outer peripheral surface is covered with the cover fabric covering the side surface of the wrapped V-belt portion to form the covered area (covering is performed such that the cover fabric is folded from the side surface to the outer peripheral surface side), so that the adhesive force between the wrapped V-belt portion and the tie band can be effectively improved, and peeling of the cover fabric at the boundary portion between the side surface of the wrapped V-belt portion and the tie band can be effectively prevented. Furthermore, both the improvement of the adhesive force and the improvement of the productivity (or the reduction of the defect rate) can be achieved. In addition to these, improvement of wear resistance and improvement of lateral pressure resistance can be further achieved. Moreover, peeling between the wrapped V-belt portion and the tie band can be prevented, and a wrapped joined V-belt having excellent durability (durable life) can be provided.

### BRIEF DESCRIPTION OF DRAWINGS

[Fig. 1] Fig. 1 is a schematic partial cross-sectional perspective view illustrating an example of a related wrapped joined V-belt.
[Fig. 2] Fig. 2 is a schematic partial cross-sectional view illustrating another example of the related wrapped joined V-belt.
[Fig. 3] Fig. 3 is a schematic partial cross-sectional view illustrating still another example of the related wrapped joined V-belt.
[Fig. 4] Fig. 4 is a schematic partial cross-sectional view illustrating an example of a wrapped joined V-belt according to the present invention.
[Fig. 5] Fig. 5 is a schematic partial cross-sectional view illustrating another example of the wrapped joined V-belt according to the present invention.
[Fig. 6] Fig. 6 is a schematic partial cross-sectional view illustrating still another example of the wrapped joined V-belt according to the present invention.
[Fig. 7] Fig. 7 is a schematic partial cross-sectional view illustrating yet another example of the wrapped joined V-belt according to the present invention.
[Fig. 8] Fig. 8 is a graph illustrating a relation between a ratio of an uncovered area and a peeling force of a tie band in wrapped joined V-belts obtained in Examples, Reference Examples, and Comparative Examples.
[Fig. 9] Fig. 9 is a schematic view illustrating a layout of a biaxial running test machine used for evaluation of wear resistance (wear rate) of wrapped joined V-belts obtained in Examples and Reference Examples.
[Fig. 10] Fig. 10 is a schematic view illustrating a layout of a triaxial running test machine used for evaluation of durable life of wrapped joined V-belts obtained in Examples and Reference Examples.

### DESCRIPTION OF EMBODIMENTS

Hereinafter, the present invention will be described in detail with reference to the accompanying drawings. In the following description, the same or similar elements (or members) may be denoted by the same reference numerals.

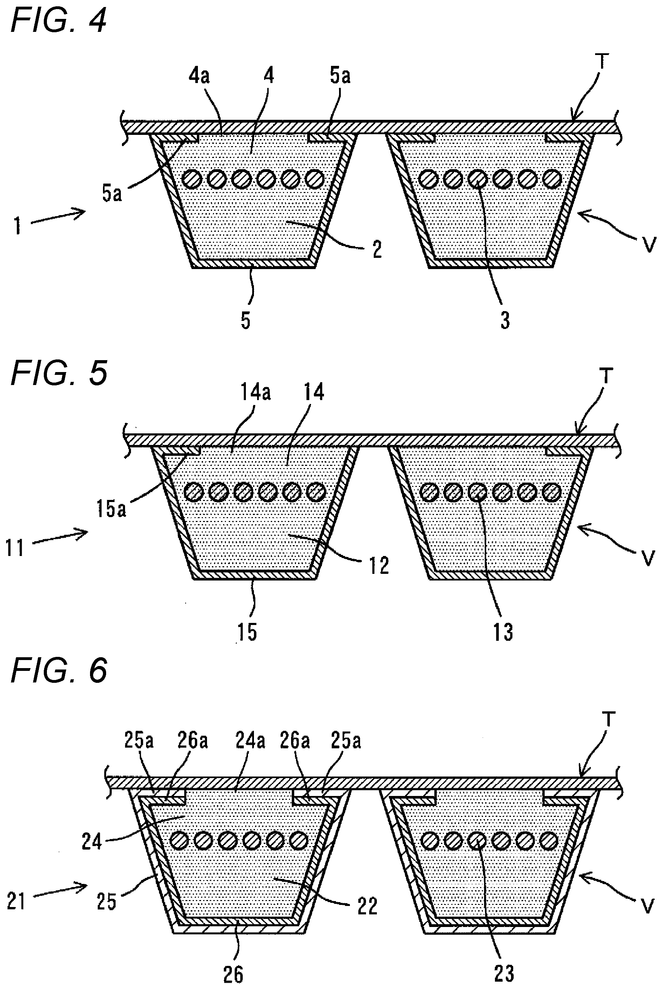

A wrapped joined V-belt according to the present invention includes a plurality of wrapped V-belt portions each including a belt main body portion covered with a cover fabric, and a tie band connecting the wrapped V-belt portions at an outer peripheral surface of each of the wrapped V-belt portions, the outer peripheral surface of each of the wrapped V-belt portions includes a covered area that is covered with the cover fabric and an uncovered area that is not covered. As an example of the wrapped joined V-belt according to the present invention, a schematic partial cross-sectional view is illustrated in Fig. 4.

A wrapped joined V-belt 1 illustrated in Fig. 4 is different from related wrapped joined V-belts illustrated in Figs. 1 to 3 in that an outer peripheral surface of a wrapped V-belt portion V (or a belt main body portion) includes covered areas 5a each covered with a cover fabric 5 and an uncovered area (a portion where a tension rubber layer 4 is exposed) 4a that is not covered.

That is, in the wrapped joined V-belt 1, each of a plurality of (two in the drawing) wrapped V-belt portions V arranged in parallel at intervals in a belt width direction includes a belt main body portion in which a compression rubber layer 2, tension members (tension member layer or cords) 3, and the tension rubber layer 4 are laminated in this order from an inner peripheral side toward an outer peripheral side (back surface side) of the belt, and the cover fabric 5 covering the periphery of the belt main body portion, and the cover fabric 5 covers an inner peripheral surface, both side surfaces, and partial areas of the outer peripheral surface of the belt, whereby the covered area 5a and the uncovered area (exposed portion of the tension rubber layer 4) 4a are formed on an outer peripheral surface side of the wrapped V-belt portion V.

The covered area 5a and the uncovered area (exposed portion of the tension rubber layer 4) 4a are formed to extend in a belt length direction, and are preferably formed over the entire length or the entire circumference in the belt length direction or a circumferential direction, similarly to the other elements (the compression rubber layer 2, the tension member 3, the tension rubber layer 4, the cover fabric 5, and a tie band (joining member) T).

In the wrapped joined V-belt 1, since the exposed portion (exposed surface) of the tension rubber layer 4 exposed in the uncovered area 4a can come into direct contact with the tie band T, and thus can be joined or connected to the tie band T with a high adhesive force by crosslinking when forming the tension rubber layer 4.

In addition, the uncovered area (exposed portion of the tension rubber layer 4) 4a is formed in a central portion or an inner portion (an inner area separated from both end portions in the belt width direction on the outer peripheral surface) of the outer peripheral surface of the belt, and the covered area 5a is formed on both side portions (areas near both end portions in the belt width direction on the outer peripheral surface) of the outer peripheral surface of the belt. In this example, since the cover fabric 5 is formed of a seamless (continuous) fabric, the inner peripheral surface, both side surfaces, and partial areas of the outer peripheral surface (covered areas 5a on both side portions of the outer peripheral surface) of the belt are covered seamlessly (in a continuous form). Therefore, end portions of the cover fabric 5 covering the inner peripheral surface and both side surfaces of the belt are folded (or embedded) between the belt main body portion and the tie band T as the covered areas 5a. As described above, in a form in which the end portions of the cover fabric 5 are folded (or embedded) (that is, a form in which the cover fabric 5 covering the covered area 5a also covers the side surfaces of the wrapped V-belt portion V), since the end portions of the cover fabric 5 does not come into contact with a pulley or the like, peeling of the cover fabric 5 at a boundary portion between the side surfaces of the wrapped V-belt portion V and the tie band T can be effectively prevented unlike the related wrapped joined V-belt 121 illustrated in Fig. 3.

Furthermore, as in this example, when the cover fabric is formed of a seamless (continuous) fabric in the circumferential direction of a belt cross section (cross section perpendicular to the belt length direction), covering can be continuously performed with one continuous piece of cover fabric precursor (fabric) along the belt length direction in a covering step described below in a section of a manufacturing method, and thus productivity can be effectively improved.

In this example, a (one continuous piece of) fabric that is seamless in the circumferential direction of the belt cross section (cross section perpendicular to the belt length direction) is used as the cover fabric 5, but a fabric in which end portions of two or more fabrics are joined (connected) or partially overlapped and joined may be used. For example, the cover fabric 5 in Fig. 4 may have a form in which two pieces of fabric are overlapped and joined on the inner peripheral surface or one side surface of the belt (for example, overlapped on the inner peripheral surface of the belt as in the cover fabric 125 of the related wrapped joined V-belt 121 illustrated in Fig. 3). That is, one fabric may continuously cover the inner peripheral surface, one side surface, and one covered area of the belt, and the other fabric joined to the fabric at the inner peripheral surface of the belt may cover the other inner peripheral surface, the other side surface, and the other covered area of the belt. In such an aspect, an inner peripheral surface side of the belt can be effectively reinforced without forming a belt main body portion in which a reinforcing fabric layer or the like is provided on an inner peripheral surface side of the compression rubber layer.

Fig. 5 illustrates a schematic partial cross-sectional view of another example of the wrapped joined V-belt according to the present invention. A wrapped joined V-belt 11 illustrated in Fig. 5 is different from the wrapped joined V-belt 1 illustrated in Fig. 4 in that a covered area 15a is formed on one side portion of an outer peripheral surface, and no covered area is formed on the other side portion (a remaining portion other than the covered area 15a formed only on one side portion of the outer peripheral surface is an uncovered area 14a). Therefore, a compression rubber layer 12 and tension members 13 are similar to the compression rubber layer 2 and the tension members 3 of the wrapped joined V-belt 1, and a tension rubber layer 14 and a cover fabric 15 are similar to the tension rubber layer 4 and the cover fabric 5 except that the shapes thereof are different corresponding to the uncovered area 14a and the covered area 15a. In such an aspect, the area of the uncovered area 14a is large, and the adhesive force can be more effectively improved.

In addition, in a case in which the covered area is formed on one side portion, it is preferable to at least form the covered area on an outermost side in the belt width direction of the wrapped joined V-belt [that is, outer peripheral surface side portions on outer sides in the belt width direction in wrapped V-belt portions on outermost sides (both ends) in the belt width direction]. For example, in a case of a wrapped joined V-belt including two wrapped V-belt portions, it is preferable to at least form covered areas at both ends in the belt width direction in the positional relation as illustrated in Fig. 5. In such an aspect, peeling of the cover fabric can be effectively prevented. That is, when used in a layout in which an idler pulley, a tension pulley (tensioner), or the like is provided on a back surface (tie band side) of the wrapped joined V-belt, both end portions in the belt width direction are prone to come into frequent contact with flange portions of these pulleys [restricting portions or restricting walls formed on both side portions in a thickness direction (axial direction) of the pulleys in order to prevent deviation of the belt]. Therefore, the cover fabric tends to peel more easily on the outermost sides in the belt width direction, but by forming the covered area on the outermost sides (both ends) in the belt width direction, peeling of the cover fabric can be effectively prevented.

Fig. 6 illustrates a schematic partial cross-sectional view of still another example of the wrapped joined V-belt according to the present invention. A wrapped joined V-belt 21 illustrated in Fig. 6 is different from the wrapped joined V-belt 1 illustrated in Fig. 4 in that the cover fabric is of two layers, and the other configurations (a compression rubber layer 22, tension members 23, and the like) are similar to those of the wrapped joined V-belt 1. In the wrapped joined V-belt 21 illustrated in Fig. 6, a periphery of a belt main body portion is covered with a first cover fabric (outer cover fabric) 25 positioned on an outer side and a second cover fabric (inner cover fabric) 26 positioned inside (on a belt main body portion side of) the first cover fabric. Similarly to the cover fabric 5 in the wrapped joined V-belt 1 illustrated in Fig. 4, the second cover fabric 26 on the inner side is formed of a seamless (continuous) fabric, seamlessly covers an inner peripheral surface, both side surfaces, and partial areas of an outer peripheral surface (covered areas of both side portions of the outer peripheral surface) 26a of the belt, and the first cover fabric 25 formed of a seamless (continuous) fabric similarly covers the belt outer side (outer side of the second cover fabric 26) along the second cover fabric 26 to form covered areas 25a of both side portions of the outer peripheral surface of the belt. In the aspect which has a plurality of layers of the cover fabric, even when the wear of the cover fabric progresses on the side surface of the V-belt portion, the rubber of the belt main body portion can be effectively prevented from being exposed.

Also in this example, similarly to the wrapped joined V-belt 1 illustrated in Fig. 4, an uncovered area 24a [exposed portion (exposed surface) of a tension rubber layer 24] can come into direct contact with the tie band T, and thus can be joined or connected to the tie band T with a high adhesive force by crosslinking. In addition, since the cover fabrics 25 and 26 covering the covered areas 25a and 26a also covers the side surfaces of the belt (that is, end portions of the cover fabrics 25 and 26 are folded or embedded at a boundary portion with the tie band T), peeling from the end portions of the cover fabrics 25 and 26 at the boundary portion can be effectively prevented. Furthermore, the productivity can be effectively improved in the covering step described below in the section of the manufacturing method.

In addition, in this example, both of the cover fabrics 25 and 26 cover the same area of the outer peripheral surface of the belt main body portion, but when a plurality of layers of the cover fabric are included, the plurality of layers of the cover fabrics may cover the same or different areas to form the covered area. For example, a form may be adopted in which each covered area 25a formed by the first cover fabric (outer cover fabric) 25 is formed to extend further toward an outer peripheral surface central portion side than each covered area 26a formed by the second cover fabric (inner cover fabric) 26 [a form may be adopted in which the covered area 25a (laminated with 26a), the covered area 25a (single layer), the uncovered area 24a, the covered area 25a (single layer), and the covered area 25a (laminated with 26a) are arranged in this order from one side portion to the other side portion of the outer peripheral surface]; and a form may be adopted in which the covered area 25a is formed to extend further toward to the outer peripheral surface central portion side than the covered area 26a in one side portion, and the covered area 26a is formed to extend further toward the outer peripheral surface central portion side than the covered area 25a in the other side portion [a form may be adopted in which the covered area 25a (laminated with 26a), the covered area 25a (single layer), the uncovered area 24a, the covered area 26a (single layer), and the covered area 25a (laminated with 26a) are arranged in this order from one side portion to the other side portion of the outer peripheral surface]. In addition, it is not necessary for all of the plurality of layers of the cover fabric to form the covered area.

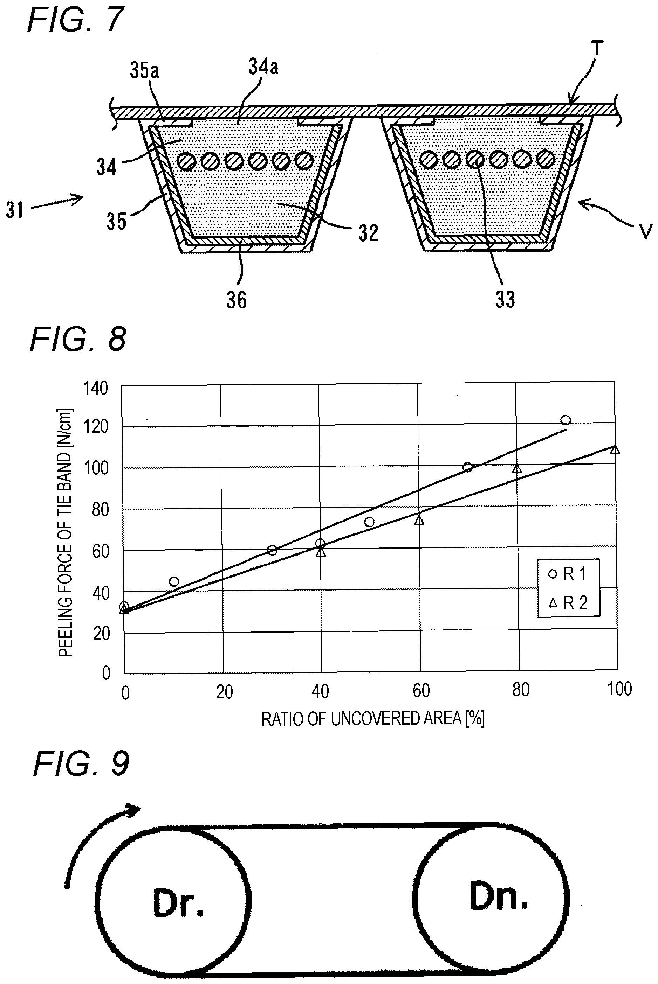

For example, Fig. 7 illustrates a schematic partial cross-sectional view of yet another example of the wrapped joined V-belt according to the present invention. A wrapped joined V-belt 31 illustrated in Fig. 7 is different from the wrapped joined V-belt 21 illustrated in Fig. 6 in that a second cover fabric (inner cover fabric) 36 positioned on the inner side does not cover an outer peripheral surface of the belt (does not form a covered area), and the other configurations (a compression rubber layer 32, tension members 33, and the like) are similar to those of the wrapped joined V-belt 21 (or 1). That is, in the wrapped joined V-belt 31 of Fig. 7, the second cover fabric (inner cover fabric) 36 positioned on the inner side covers only the inner peripheral surface and both side surfaces of the belt with a seamless (continuous) fabric without forming a covered area on the outer peripheral surface side, whereas a first cover fabric (outer cover fabric) 35 positioned on the outer side covers the inner peripheral surface and both side surfaces of the belt and also covers both side portions of the outer peripheral surface with a seamless (continuous) fabric to form covered areas 35a (both end portions of the fabric are folded or embedded at the boundary portion with the tie band T). In such an aspect, similarly to the wrapped joined V-belt 21 illustrated in Fig. 6, even when wear of the cover fabric progresses on the side surface of the V-belt portion, it is possible not only to effectively prevent the rubber of the belt main body portion from being exposed by the plurality of layers of outer fabric, but also to effectively prevent a decrease in bendability of the belt since the covered area is formed of a single-layer cover fabric. In addition, the material cost of the cover fabric can be reduced, which is advantageous in terms of cost.

Good belt bendability (which allows bending with a small force) tends to improve durability because a stress generated by bending is small, making cracks less likely to occur, and since the energy consumed for the bending (heat generation and dissipation) is reduced, the power-transmission efficiency tends to be improved.

Also in this example, similarly to the wrapped joined V-belt 21 (or 1) illustrated in Fig. 6 (or Fig. 4), an uncovered area 34a [exposed portion (exposed surface) of a tension rubber layer 34] can come into direct contact with the tie band T, and thus can be joined or connected to the tie band T with a high adhesive force by crosslinking. In addition, since the first cover fabric (outer cover fabric) 35 covering the covered area 35a also covers the side surfaces of the belt (that is, the end portions of the first cover fabric 35 positioned on the outer side are folded or embedded at the boundary portion with the tie band T), even if the end portion of the second cover fabric (inner cover fabric) 36 is not folded, peeling from the end portions of the cover fabric at the boundary portion can be effectively prevented. Furthermore, the productivity can be effectively improved in the covering step described below in the section of the manufacturing method.

Further, the cover fabric in Fig. 7 includes two layers of the outermost first cover fabric (outer cover fabric) 35 and the second cover fabric (inner cover fabric) 36 inside the first cover fabric 35, but it is not necessarily required to be of two layers, and a plurality of inner second cover fabrics may be laminated. When the inner second cover fabric includes a plurality of layers, at least one layer of the second cover fabric may form a covered area that covers the outer peripheral surface side of the belt, but from the viewpoint of improving the bendability of the belt and reducing the material cost, it is preferable that all of the plurality of second cover fabrics (inner cover fabrics) do not form the covered area, and only the outermost first cover fabric (outer cover fabric) forms the covered area. Therefore, the one or more second cover fabrics (inner cover fabrics) preferably cover at least a partial area selected from the inner peripheral surface and both side surfaces of the belt (preferably the inner peripheral surface and both side surfaces of the belt) without covering the outer peripheral surface of the belt.

### [Cover Fabric]

The cover fabric is formed of a common fabric. Examples of the fabric include fabric materials such as woven fabric, knitted fabric (weft knitted fabric, warp knitted fabric), and nonwoven fabric. Among these fabrics, a woven fabric woven in a form of plain weave, twill weave, satin weave, or the like, a woven fabric woven at a wide angle in which an intersection angle between the warp and the weft is about more than 90° and 120° or less, a knitted fabric, and the like are preferable, and a woven fabric generally used as a covering fabric of a power-transmission belt for general industrial use or agricultural machine [a plain woven fabric in which the intersection angle between the warp and the weft is a right angle, and a plain woven fabric (wide angle canvas) in which the intersection angle between the warp and the weft is about more than 90° and 120° or less] is particularly preferable. Furthermore, in an application where durability is required, the fabric may be a wide angle canvas.

From the viewpoint of bendability, the cover fabric is preferably disposed such that extending directions of the warp and the weft intersect with the belt length direction, and may be disposed such that the direction of each of the warp and the weft forms an angle of, for example, about 45° to 75° (for example, about 50° to 70°), preferably about 55° to 65° with respect to the belt length direction.

Generally used fibers that constitute the fabric include: a synthetic fiber such as a polyolefin fiber (a polyethylene fiber, a polypropylene fiber, and the like), a polyamide fiber (a polyamide 6 fiber, a polyamide 66 fiber, a polyamide 46 fiber, an aramid fiber, and the like), a polyester fiber (polyalkylene arylate fiber and the like), a vinyl alcohol fiber (a polyvinyl alcohol fiber, an ethylene-vinyl alcohol copolymer fiber, a vinylon fiber, and the like), and a polyparaphenylene benzobisoxazole (PBO) fiber; a natural fiber such as a cellulosic fiber (a cellulose fiber, cotton, a cellulose derivative fiber, and the like), hemp, and wool; and an inorganic fiber such as a carbon fiber. These fibers may be used individually as single yarns or combined as blended yarns consisting of two or more types.

Among these fibers, a blended yarn of polyester fibers and cellulosic fibers is preferable in terms of excellent mechanical properties and economy.

The polyester fiber may be a polyalkylene arylate fiber. Examples of the polyalkylene arylate fiber include poly C₂₋₄ alkylene -C₈₋₁₄ arylate fibers such as polyethylene terephthalate (PET) fibers and polyethylene naphthalate (PEN) fibers.

Examples of the cellulosic fibers include cellulose fibers (derived from plants, animals, bacteria, or the like) and cellulose derivative fibers. Examples of the cellulose fibers include natural plant-derived cellulose fibers (pulp fibers) such as wood pulp (softwood, hardwood pulp, and the like), bamboo fibers, sugar cane fibers, seed hair fibers (cotton fibers (cotton linter), kapok, and the like), gin skin fibers (hemp, paper mulberry, oriental paperbush, and the like), and leaf fibers (Manila hemp, New Zealand flax, and the like); animal-derived cellulose fibers such as Hoya cellulose; bacterial cellulose fibers; and cellulose of algae. Examples of the cellulose derivative fibers include cellulose ester fibers and regenerated cellulose fibers (rayon, cupro, lyocell, and the like).

A mass ratio of the polyester fibers to the cellulosic fibers is about, for example, the former/the latter = 90/10 to 10/90, preferably 80/20 to 20/80, and more preferably 70/30 to 30/70 (particularly 60/40 to 40/60).

An average fineness of the fiber constituting the fabric is, for example, about 5 counts to 30 counts, preferably about 10 counts to 25 counts, and more preferably about 15 counts to 25 counts.

The fabric (raw fabric) has a fabric weight of, for example, about 100 g/m² to 500 g/m², preferably about 200 g/m² to 400 g/m², and more preferably about 250 g/m² to 300 g/m².

When the fabric (raw fabric) is a woven fabric, a yarn density (warp density, weft density) of the fabric is, for example, about 60 yarns/50 mm to 100 yarns/50 mm, preferably about 65 yarns/50 mm to 90 yarns/50 mm, and more preferably about 70 yarns/50 mm to 80 yarns/50 mm.

The cover fabric may be subjected to a common adhesion treatment (or surface treatment) [for example, treatment with a treatment liquid containing an adhesive component] in order to improve the adhesiveness with the belt main body portion. Examples of the adhesive component (or surface treatment agent) used in the adhesion treatment include an isocyanate (polyisocyanate compound), an epoxy resin (epoxy compound), a silane coupling agent, an amino resin, a rubber component (rubber latex, rubber paste, or the like), and an RFL liquid containing resorcinol (R), formaldehyde (F), and rubber or latex (L) [for example, an RFL liquid in which resorcinol (R) and formaldehyde (F) form a condensate (RF condensate) and contain a rubber component such as vinylpyridine-styrene-butadiene copolymer rubber]. These adhesive components may be used individually or in combination of two or more thereof, and sequential treatments may be performed a plurality of times using the same or different adhesive components.

Among these adhesive components, the rubber component, the RFL liquid, or a combination thereof is preferable. The rubber component is preferably an adhesive component containing the same type of rubber component (preferably the same) as the rubber component of the belt main body portion (tension rubber layer, compression rubber layer, or the like).

The adhesion treatment using the rubber component may be, for example, an adhesion treatment such as a treatment of soaking (immersing) a fabric in a rubber paste obtained by dissolving a rubber composition containing a rubber component in a solvent, or a treatment of frictioning (rubbing) the solid rubber composition into a fabric. In the adhesion treatment, at least one surface of the fabric may be treated, and it is preferable to treat at least a surface that comes into contact with the belt main body portion, and particularly preferable to treat both surfaces.

Examples of the rubber component constituting the rubber composition (rubber composition for adhesion treatment) to be adhered to the cover fabric include rubber components similar to those exemplified in the section of the tension rubber layer described below, including preferred embodiments thereof. The rubber component in the rubber composition for adhesion treatment is preferably a rubber component of the same type (particularly the same) as the rubber component in a crosslinked rubber composition forming the tension rubber layer and/or the compression rubber layer.

In addition to the rubber component, the rubber composition for adhesion treatment may or may not contain a common additive as necessary. Examples of the additive include additives similar to the additives exemplified in the section of the tension rubber layer described below, including preferred embodiments thereof.

The fabric after the adhesion treatment (treated fabric) has a fabric weight of, for example, about 300 g/m² to 800 g/m², preferably about 400 g/m² to 600 g/m², and more preferably about 450 g/m² to 550 g/m².

An average thickness of the cover fabric (the average thickness of each layer when the cover fabric is of a plurality of layers) is, for example, about 0.4 mm to 2 mm, preferably about 0.45 mm to 1.4 mm, and more preferably about 0.5 mm to 1 mm (for example, about 0.55 mm to 0.8 mm). If the thickness of the cover fabric is too thin, there is a concern that the wear resistance is reduced, and if the thickness is too thick, there is a concern that the bendability of the belt is reduced.

A friction factor of the cover fabric serving as a power-transmission surface is, for example, about 0.9 to 1, preferably about 0.91 to 0.96, and more preferably about 0.92 to 0.95. In the present specification and claims, the friction factor can be measured by the method described in JP2022-85864A.

The cover fabric may be of a single layer formed by one piece of cover fabric as long as the cover fabric can form the covered area and the uncovered area on the outer peripheral surface side of the belt, and from the viewpoint of further easily improving wear resistance, the cover fabric may be of a plurality of layers in which a plurality of layers of the cover fabric are laminated (for example, about two layers to five layers, preferably about two layers to four layers, more preferably about two layers to three layers, and particularly two layers), whereas in terms of productivity and lateral pressure resistance, one layer to three layers are preferred [for example, a single layer (1 ply) or two layers (2 plies)], and from the viewpoint of achieving a favorable balance among productivity, wear resistance, and lateral pressure resistance, as well as excellent durability, two layers to three layers are more preferred, and two layers are particularly preferred. If the number of layers of the cover fabric is too large, productivity may decrease and lateral pressure resistance may also decrease (and therefore durability may also decrease), and if the number of layers is too small, when manufacturing in accordance with the manufacturing method described below, portions of the side surface of the belt (power-transmission surface) may easily be left uncovered by the cover fabric during the covering step (rubber may easily be exposed from the side surface), which may not only decrease productivity and wear resistance but also cause rubber to easily seep out or be exposed from the cover fabric that wears during belt running, which may increase the friction factor with the pulley and generate heat (heat generation may reduce the adhesive force between the wrapped V-belt portion and the tie band), thereby decreasing durability.

When the cover fabric is of a plurality of layers (a form in which a plurality of pieces of the cover fabric are laminated), each of the plurality of pieces of the cover fabric may cover the same or different areas on the outer peripheral surface of the belt main body portion to form the covered area. In addition, among the plurality of layers of the cover fabric, it is not necessary for all of the cover fabrics to form the covered area, and at least one layer of the cover fabric may form the covered area. For example, the first cover fabric positioned on the outermost side (pulley side) may cover at least the outer peripheral surface of the belt (forms the covered area), and the one or more second cover fabrics (inner cover fabrics) positioned on the inner side of the first cover fabric (outer cover fabric) (belt main body portion side) may cover the outer peripheral surface, but from the viewpoint of belt bendability and material cost reduction, it is preferable that the second cover fabric does not cover the outer peripheral surface (does not form the covered area).

The cover fabric covering at least the inner peripheral surface and both side surfaces of the belt is generally formed to extend in the belt length direction. In the outer peripheral surface of the belt, the covered area at least covered with the cover fabric and the uncovered area that is not covered may not necessarily be formed to extend in the belt length direction, but are preferably formed to extend in the belt length direction from the viewpoint of productivity. The fabric forming the cover fabric (when the cover fabric is of a plurality of layers, the fabric forming each layer) is preferably a seamless (one continuous piece of) fabric in the circumferential direction of the belt cross section (cross section perpendicular to the belt length direction) and/or the belt length direction. That is, the fabric forming the cover fabric is preferably one continuous piece of fabric capable of covering at least the inner peripheral surface and both side surfaces of the belt [preferably, at least one side portion (particularly, both side portions) of the outer peripheral surface] over the entire length in the belt length direction.

In the present application, the seamless or continuous fabric (the cover fabric or the cover fabric precursor) means that the fabric may have a joining portion (a connecting portion) or the like as long as the fabric is one piece of fabric that can be wound independently in a state before the covering step (or the cover fabric precursor), and includes, for example, a fabric in which end portions of two or more pieces of fabric are joined (connected) or partially overlapped and joined.

The covered area is preferably formed on at least one side portion of the outer peripheral surface of the belt (preferably both side portions in terms of easily achieving both adhesiveness to the tie band and productivity) on the vertical cross section in the belt length direction, and it is preferable that the cover fabric covering the covered area (the side portion of the outer peripheral surface of the belt) also covers the side surface of the belt, that is, the end portion of the cover fabric covering the side surface of the belt is folded or embedded in the boundary portion with the tie band in terms of effectively preventing peeling of the end portion of the cover fabric from the boundary portion.

An area ratio of the uncovered area with respect to an area of the outer peripheral surface (a total area of the covered area and the uncovered area) of the wrapped V-belt portion (the wrapped V-belt portion after crosslinking) may be, for example, about 1% to 99% (for example, about 15% to 97%, preferably about 25% to 95%), may be about 10% to 90% (for example, about 20% to 90%), may be more preferably about 25% to 85% (for example, about 26% to 83%), and may be still more preferably about 30% to 80% (for example, about 40% to 70%), but may be particularly preferably 50% to 90% (for example, 55% to 85%, preferably 60% to 80%, and even more preferably 65% to 75%) from the viewpoint of excellent balance among the adhesiveness to the tie band, the wear resistance (particularly, ease of preventing peeling of the cover fabric at the boundary portion with the tie band), and the productivity (particularly, high workability and yield in the covering step). The area ratio may be an area ratio in an embodiment in which the cover fabric is of a single layer (one layer) or of a plurality of layers (particularly, single layer). In addition, in a case in which the cover fabric is of a plurality of layers (for example, two layers to four layers, preferably two layers to three layers, and particularly two layers), the area ratio of the uncovered area with respect to the area of the outer peripheral surface of the wrapped V-belt portion may be, for example, about 20% to 98% (for example, about 25% to 95%), may be preferably 30% to 97% (for example, 40% to 95%), may be more preferably 45% to 96% (for example, 50% to 95%, preferably 55% to 85%, and among these, 60% to 80%), may be still more preferably 60% to 95% (for example, 65% to 93%,and preferably 65% to 75%), and among these, may be preferably about 68% to 92% (for example, about 70% to 90%), and may be particularly preferably about 50% to 90% (for example, about 55% to 85%, preferably about 60% to 80%, and more preferably about 65% to 75%) from the viewpoint of excellent balance among the adhesiveness to the tie band, the wear resistance (particularly, ease of preventing peeling of the cover fabric at the boundary portion with the tie band), and the productivity (particularly, high workability and yield in the covering step). If the ratio of the uncovered area is too small, there is a concern that the adhesive force (or peeling force) with the tie band cannot be sufficiently secured, and if the ratio of the uncovered area is too large, for example, when manufacturing in accordance with the manufacturing method described below, it is difficult to align the cover fabric with respect to the belt main body portion in the covering step, and there is a concern that a portion that is not covered with the cover fabric is likely to be generated on the side surface of the belt (power-transmission surface) (productivity is reduced). In the wrapped joined V-belt, if the rubber is exposed on the side surface of the belt (power-transmission surface), the friction factor of the side surface of the belt becomes locally high, and there is a concern that the characteristics or properties in the circumferential direction may become non-uniform or the wear resistance or the noise resistance may significantly decrease, which may make the wrapped joined V-belt unusable for its intended use. However, when the cover fabric is of a plurality of layers, even if the ratio of the uncovered area is relatively large, it tends to be easy to effectively prevent the generation of a portion not covered with the cover fabric (decrease in productivity).

In the present application, the area ratio of the uncovered area can be measured according to a method described in Examples described below.

### [Belt Main Body Portion]

The belt main body portion is covered with the cover fabric on the inner peripheral surface, both side surfaces, and a partial area of the outer peripheral surface, thereby forming the wrapped V-belt portion. For example, the wrapped V-belt portion may be a V-belt (V-belt portion) including: the endless belt main body (belt main body portion) having a V-shaped cross section and including the compression rubber layer on the inner peripheral side, the tension rubber layer on the outer peripheral side, and a tension member layer (adhesive rubber layer) interposed therebetween and having cords embedded therein, and the cover fabric covering a periphery of the V-shaped cross section of the belt main body over the entire length in the belt length direction (belt circumferential direction), in which both left and right side surfaces of the V-shaped cross section covered with the cover fabric are frictional power-transmission surfaces. In the V-shaped cross-section, a side with a wide belt width is referred to as the outer peripheral side, and a side with a narrow belt width is referred to as the inner peripheral side. If necessary, a reinforcing fabric layer formed along the belt length direction may be included on the inner peripheral surface side of the compression rubber layer.

On the outer peripheral surface side (surface of the tension rubber layer) of the wrapped V-belt portion (belt main body portion), the uncovered area that is not covered with the cover fabric is formed, and the tension rubber layer is exposed, and the exposed tension rubber layer can be firmly adhered or joined to the tie band at the time of crosslinking (connecting step in the manufacturing method described below), and thus a sufficient adhesive force (peeling force) can be secured.

### (Tension Rubber Layer)

The tension rubber layer may be formed of a vulcanized or crosslinked rubber composition commonly used as a rubber composition (rubber composition containing a rubber component) of a wrapped V-belt.

### Rubber Component

The rubber component in the crosslinked rubber composition forming the tension rubber layer can be selected from known vulcanizable or crosslinkable rubbers and/or elastomers, and examples thereof include a diene rubber [a natural rubber, an isoprene rubber, a butadiene rubber, a chloroprene rubber (CR), a styrene-butadiene rubber (SBR), a vinylpyridine-styrene-butadiene copolymer rubber, an acrylonitrile-butadiene rubber (nitrile rubber), a hydrogenated product of the diene rubber such as a hydrogenated nitrile rubber (containing a mixed polymer of a hydrogenated nitrile rubber and an unsaturated carboxylic acid metal salt), and the like], an olefin rubber [an ethylene-α-olefin rubber (an ethylene-α-olefin elastomer), a polyoctenylene rubber, an ethylene-vinyl acetate copolymer rubber, a chlorosulfonated polyethylene rubber, an alkylated chlorosulfonated polyethylene rubber, and the like], an epichlorohydrin rubber, an acrylic rubber, a silicone rubber, a urethane rubber, and a fluorine rubber. These rubber components may be used individually or in combination of two or more thereof.

Among these rubber components, an ethylene-α-olefin elastomer (ethylene-α-olefin rubber) such as an ethylene-propylene copolymer (EPM) and an ethylene-propylene-diene terpolymer (EPDM) and a chloroprene rubber are generally used because a crosslinking agent (or vulcanization agent) and crosslinking accelerator (or vulcanization accelerator) are easily diffused, and in particular, when used in a high-load environment such as a variable speed belt, the chloroprene rubber and the EPDM are preferable because of their excellent balance of mechanical strength, weather resistance, heat resistance, cold resistance, oil resistance, adhesiveness, and the like. The chloroprene rubber may be a sulfur-modified rubber or a non-sulfur-modified rubber. In addition, the ethylene-α-olefin elastomer such as EPDM is particularly preferable in terms of being superior to the chloroprene rubber in heat resistance and weather resistance, being capable of being highly filled with a reinforcing agent, and easily increasing mechanical strength. The ethylene-α-olefin elastomer such as EPDM tends to have lower adhesiveness than chloroprene or the like, and is likely to peel off from the tie band. However, in the wrapped joined V-belt according to the present invention, even when the ethylene-α-olefin elastomer such as EPDM is used as the rubber component of the tension rubber layer, the wrapped V-belt portion can adhere to the tie band with a high adhesive force, and peeling of the tie band can be effectively prevented.

When the rubber component contains the ethylene-α-olefin elastomer such as EPDM, the ratio of the ethylene-α-olefin elastomer (particularly EPDM) in the rubber component may be, for example, 50 mass% or more (particularly about 80 mass% to 100 mass%), and particularly preferably 100 mass% (only ethylene-α-olefin elastomer such as EPDM).

Regarding the ethylene-α-olefin elastomer, a content of ethylene (ratio of ethylene units) in the ethylene-α-olefin elastomer may be 30 mass% or more, for example, about 35 mass% to 70 mass%, preferably about 40 mass% to 60 mass%, and more preferably about 45 mass% to 55 mass%. When the ethylene content is too large, there is a concern that processability and crack resistance are deteriorated.

In the present application, the ethylene content refers to a mass ratio of an ethylene unit in all units constituting the ethylene-α-olefin elastomer, can be measured by a common method, and may be a ratio based on ethylene as a monomer.

Furthermore, in the present application, when a plurality of kinds of ethylene-α-olefin elastomers are used, the ethylene content means an average value based on a mass ratio (average ethylene content). That is, the average ethylene content is the sum of the products of the ethylene content and the mass fraction of the respective ethylene-α-olefin elastomers.

In the ethylene-α-olefin elastomer, a ratio (mass ratio) of ethylene to α-olefin is about the former/the latter = 40/60 to 90/10, preferably 45/55 to 80/20, more preferably 50/50 to 70/30, and even more preferably 50/50 to 60/40.

A diene content (particularly ethylidene norbornene content) of the ethylene-α-olefin elastomer (particularly an ethylene-α-olefin-diene terpolymer such as EPDM) may be, for example, about 0.1 mass% to 15 mass%, preferably about 1 mass% to 10 mass%, more preferably about 2 mass% to 8 mass%, even more preferably about 3 mass% to 7 mass%, and most preferably about 4 mass% to 6 mass%. If the diene content is too large, a high heat resistance may not be ensured. If the diene content is too small, processability and crack resistance may decrease.

In the present application, the diene content refers to a mass ratio of diene monomer units in all units constituting the ethylene-α-olefin elastomer, can be measured by a common method, and may be a ratio based on the monomers.

A Mooney viscosity [ML(1 + 4)125°C] of an uncrosslinked ethylene-α-olefin elastomer may be, for example, about 10 to 85 (for example, 12 to 50), preferably about 15 to 30, and more preferably about 18 to 25. When the Mooney viscosity is too high, processability and crack resistance may decrease.

In the present application, the Mooney viscosity [ML(1 + 4)125°C] can be measured by a method in accordance with JIS K 6300-1(2013), and test conditions include a test temperature of 125°C, preheating of 1 minute, and a rotor operating time of 4 minutes using an L-shaped rotor. The Mooney viscosity is used as an index representing fluidity (ease of processing) of rubber by filling the cavity with the uncrosslinked ethylene-α-olefin elastomer so as to be in contact with a rotor provided with grooves on its surface, and measuring a torque necessary for rotating the rotor.

Furthermore, in the present application, when a plurality of kinds of ethylene-α-olefin elastomers are used, the Mooney viscosity means an average value (average Mooney viscosity) based on a mass ratio. That is, the average Mooney viscosity is the sum of the products of the Mooney viscosity and the mass fraction of the respective ethylene-α-olefin elastomers.

### Additive

In addition to the rubber component, the crosslinked (vulcanized) rubber composition may or may not contain a common additive, if necessary. Examples of additives include a filler, a short fiber, a crosslinking agent (or vulcanization agent), a co-crosslinking agent or a crosslinking aid (or vulcanization aid), a crosslinking accelerator (or vulcanization accelerator), a crosslinking retardant (or vulcanization retardant), metal oxides (such as calcium oxide, barium oxide, iron oxide, copper oxide, titanium oxide, aluminum oxide, or zinc oxide), a softener (oils such as paraffinic oil and naphthenic oil), a processing agent or a processing aid (such as an aliphatic acid such as stearic acid, an aliphatic acid metal salt such as a metal stearate, an aliphatic acid amide such as a stearamide, a wax, or a paraffin), a plasticizer [an aliphatic carboxylic acid plasticizer (such as an adipic acid ester plasticizer, and a sebacic acid ester plasticizer), an aromatic carboxylic acid ester plasticizer (such as a phthalic acid ester plasticizer, and a trimellitic acid ester plasticizer), an oxycarboxylic acid ester plasticizer, a phosphoric acid ester plasticizer, an ether plasticizer, an ether ester plasticizer, and the like], an adhesiveness improver [for example, a resorcinol-formaldehyde co-condensate (RF condensate), an amino resin (a condensate of a nitrogen-containing cyclic compound and formaldehyde, for example, a melamine resin such as hexamethylol melamine and hexaalkoxymethyl melamine (such as hexamethoxymethyl melamine, and hexabutoxymethyl melamine), an urea resin such as methylol urea, and a benzoguanamine resin such as a methylol benzoguanamine resin), a co-condensate thereof (such as a resorcinol-melamine-formaldehyde co-condensate)], a tackifier, a coupling agent (such as a silane coupling agent), an anti-aging agent (such as an antioxidant, a heat antiaging agent, an antiflex-cracking agent, and an antiozonant), a stabilizer (such as an ultraviolet absorbent and a thermal stabilizer), a flame retardant, a colorant, a lubricant, and an antistatic agent. The metal oxide may act as a crosslinking agent depending on the type of the rubber component. In the adhesiveness improver, the resorcinol-formaldehyde co-condensate and the amino resin may be an initial condensate (prepolymer) of resorcinol and/or a nitrogen-containing cyclic compound such as melamine and formaldehyde.

Examples of the filler include carbon black, silica, clay, calcium carbonate, talc, and mica. The filler often contains a reinforcing filler, and such a reinforcing filler may be carbon black, silica (reinforcing silica), or the like. In general, the reinforcing property of silica is smaller than the reinforcing property of carbon black. These fillers may be used individually or in combination of two or more thereof. Among these fillers, the reinforcing fillers such as carbon black and silica, and clay are preferable, it is more preferable that at least one reinforcing filler is contained, and it is particularly preferable that carbon black and silica be used in combination.

Carbon black is classified into "N0**" to "N9**" by ASTM (classified based on an iodine adsorption amount), and is also classified into SAF, HAF, GPF, and the like based on the performance of rubber products and the like in the related art, and N110 (SAF), N220 (ISAF), N330 (HAF), and the like having small primary particle diameters are sometimes referred to as hard carbon, and N550 (FEF), N660 (GPF), N762 (SRF), and the like having large primary particle diameters are sometimes referred to as soft carbon. These kinds of carbon black may be used individually or in combination of two or more thereof. Among these, SRF, ISAF, and HAF are preferable, and soft carbon such as SRF is more preferable.

An average primary particle diameter of the soft carbon may be, for example, 42 nm to 100 nm, preferably 45 nm to 80 nm, more preferably 50 nm to 75 nm, and even more preferably 60 nm to 70 nm. Meanwhile, an average primary particle diameter of the hard carbon may be, for example, 10 nm to 38 nm, preferably 15 nm to 35 nm, more preferably 20 nm to 33 nm, and even more preferably 25 nm to 30 nm.

A DBP absorption amount of the carbon black can be selected from a range of, for example, about 50 mL/100 g to 500 mL/100 g, and may be preferably about 60 mL/100 g to 120 mL/100 g (for example, about 60 mL/100 g to 80 mL/100 g).

In the present application, the DBP absorption amount of the carbon black means a value (OAN) that can be measured for an uncompressed sample in accordance with JIS K 6217-4(2017).

The iodine adsorption amount of the carbon black may be, for example, about 5 g/kg to 200 g/kg, preferably about 10 g/kg to 140 g/kg (for example, about 15 g/kg to 130 g/kg), and more preferably about 20 g/kg to 30 g/kg.

In the present application, the iodine adsorption amount of the carbon black can be measured in accordance with a standard test method of ASTM D1510-17.

A BET specific surface area of the carbon black may be, for example, about 10 m²/g to 400 m²/g, preferably about 15 m²/g to 150 m²/g (for example, about 20 m²/g to 120 m²/g), and more preferably about 25 m²/g to 40 m²/g.

In the present application, the BET specific surface area means a specific surface area measured by a BET method using a nitrogen gas.

Examples of the silica include dry silica, wet silica, and surface-treated silica. The silica can be classified into, for example, dry-method white carbon, wet-method white carbon, colloidal silica, and precipitated silica, depending on a production method. These types of silica may be used individually or in combination of two or more thereof. Among these types of silica, silica having a surface silanol group (anhydrous silicic acid, hydrated silicic acid) is preferred, and a hydrated silicic acid having a large number of surface silanol groups has a strong chemical bonding force with the rubber component.

A nitrogen adsorption specific surface area of the silica by the BET method is, for example, 50 m²/g to 400 m²/g, preferably 70 m²/g to 300 m²/g, more preferably 100 m²/g to 250 m²/g, and even more preferably 150 m²/g to 200 m²/g.

A ratio of the filler (particularly the reinforcing filler) with respect to 100 parts by mass of the rubber component may be, for example, about 10 parts by mass to 100 parts by mass, preferably about 20 parts by mass to 80 parts by mass (for example, about 50 parts by mass to 70 parts by mass). A ratio of the reinforcing filler with respect to the entire filler may be, for example, 50 mass% or more, preferably 75 mass% or more (for example, 80 mass% or more), more preferably 90 mass% or more, and may be 100 mass%. A ratio of the carbon black (particularly soft carbon) with respect to 100 parts by mass of the rubber component may be, for example, about 0 parts by mass to 100 parts by mass (for example, about 5 parts by mass to 80 parts by mass), preferably about 5 parts by mass to 15 parts by mass. A ratio of silica with respect to 100 parts by mass of the rubber component may be, for example, about 0 parts by mass to 100 parts by mass (for example, about 10 parts by mass to 90 parts by mass), preferably about 25 parts by mass to 75 parts by mass (for example, 40 parts by mass to 60 parts by mass). When both carbon black (particularly soft carbon) and silica are contained, a ratio of the former to the latter (mass ratio) may be, for example, about 5/95 to 25/75, preferably about 10/90 to 20/80. When the content of the carbon black is too large or the content of the silica is too small, there is a concern that the adhesiveness is reduced and the tie band or the cover fabric is easily peeled off.

Examples of the short fiber include the fibers exemplified as the fibers constituting the fabric in the section of the cover fabric. These short fibers may be used individually or in combination of two or more thereof. Among these short fibers, the polyester fiber (for example, the polyalkylene arylate fiber such as the PET fiber), the cellulosic fiber (for example, cotton), or a combination thereof are preferable. When the polyester fiber (for example, the polyalkylene arylate fiber such as the PET fiber) and the cellulosic fiber (for example, cotton) are combined, the ratio of the former to the latter (mass ratio) may be, for example, about 50/50 to 80/20, preferably about 60/40 to 70/30.

An average fiber diameter of the short fiber may be, for example, about 2 µm or more, and preferably about 2µm to 100 µm. An average fiber length of the short fiber is, for example, about 1 mm to 20 mm, preferably about 1.5 mm to 10 mm, more preferably about 2 mm to 8 mm (for example, about 2.5 mm to 6.5 mm).

From the viewpoint of dispersibility and adhesiveness of the short fiber in the rubber composition, the short fiber may be subjected to a common adhesion treatment (or surface treatment) [for example, treatment with a treatment liquid containing an adhesive component]. Examples of the adhesive component (or surface treatment agent) used in the adhesion treatment include components similar to those exemplified in the section of the cover fabric. These adhesive components may be used individually or in combination of two or more thereof, or the short fiber may be treated a plurality of times sequentially with the same or different adhesive components.

The short fibers may be oriented in the belt width direction and embedded in the rubber composition (rubber layer) in order to prevent compressive deformation of the belt against pressure from the pulley (from the viewpoint of improving lateral pressure resistance).

A ratio of the short fiber with respect to 100 parts by mass of the rubber component may be, for example, about 0 parts by mass to 50 parts by mass (for example, about 20 parts by mass to 40 parts by mass), preferably about 0 parts by mass to 30 parts by mass (particularly about 0 parts by mass). If the ratio of the short fiber is too large, there is a concern that the adhesiveness to the tie band decreases or the bendability decreases.

As the crosslinking agent (or vulcanization agent), a common component can be used depending on the type of the rubber component, and examples thereof include an organic peroxide (for example, a diacyl peroxide, a peroxy ester, and a dialkyl peroxide, and preferably the dialkyl peroxide such as 1,3-bis(t-butylperoxyisopropyl)benzene), and a sulfur-based vulcanization agent [for example, powdered sulfur, precipitated sulfur, colloidal sulfur, insoluble sulfur, highly dispersible sulfur, and sulfur chloride (sulfur monochloride, sulfur dichloride, and the like), and preferably the powdered sulfur)]. These crosslinking agents (or vulcanization agents) may be used individually or in combination of two or more thereof. Among these crosslinking agents (or vulcanization agents), at least the organic peroxide is preferably contained, and a combination of the organic peroxide and the sulfur-based vulcanization agent is more preferable in terms of easily improving the adhesive force (or peeling force) to the tie band.

A ratio of the crosslinking agent (or vulcanization agent) may be selected from a range of, for example, about 1 part by mass to 20 parts by mass (for example, about 1.5 parts by mass to 10 parts by mass), and preferably about 2 parts by mass to 8 parts by mass (for example, about 4 parts by mass to 7 parts by mass) in terms of solid content with respect to 100 parts by mass of the rubber component, depending on the types of the crosslinking agent (or vulcanization agent) and the rubber component. A ratio of the organic peroxide may be, for example, about 0 parts by mass to 10 parts by mass (for example, about 1 part by mass to 8 parts by mass), and preferably about 3 parts by mass to 7 parts by mass in terms of solid content with respect to 100 parts by mass of the rubber component. A ratio of the sulfur-based vulcanization agent may be, for example, about 0 parts by mass to 5 parts by mass (for example, about 1 part by mass to 3 parts by mass), and preferably about 0.3 parts by mass to 0.7 parts by mass in terms of solid content with respect to 100 parts by mass of the rubber component. When both the organic peroxide and the sulfur-based vulcanization agent are combined, the ratio of the former to the latter (mass ratio) may be, for example, about 80/20 to 99/1, preferably about 85/15 to 95/5. If the ratio of the organic peroxide is too small, it may be difficult to improve the heat resistance.

Examples of the co-crosslinking agent (crosslinking aid or co-vulcanization agent (co-agent)) include known crosslinking aids, for example, a polyfunctional (iso)cyanurate [for example, triallyl isocyanurate (TAIC), triallyl cyanurate (TAC)], a polydiene (for example, 1,2-polybutadiene), a metal salt of an unsaturated carboxylic acid [for example, a polyvalent metal salt of a (meth)acrylic acid such as zinc (meth)acrylate and magnesium (meth)acrylate], oximes (for example, quinone dioxime), guanidines (for example, diphenyl guanidine), a polyfunctional (meth)acrylate [for example, an alkanediol di(meth)acrylate such as ethylene glycol di(meth)acrylate and butanediol di(meth)acrylate, and an alkane polyol poly(meth)acrylate such as trimethylolpropane tri(meth)acrylate and pentaerythritol tetra(meth)acrylate], and bismaleimides (an aliphatic bismaleimide, for example, an alkylene bismaleimide such as N,N'-1,2-ethylene dimaleimide, N,N'-hexamethylene bismaleimide, and 1,6'-bismaleimido-(2,2,4-trimethyl)cyclohexane; an arene bismaleimide or aromatic bismaleimide, such as N,N'-m-phenylene dimaleimide, 4-methyl-1,3-phenylene dimaleimide, 4,4'-diphenylmethane dimaleimide, 2,2-bis[4-(4-maleimidophenoxy)phenyl]propane, 4,4'-diphenyl ether dimaleimide, 4,4'-diphenylsulfone dimaleimide, and 1,3-bis(3-maleimidophenoxy)benzene). These co-crosslinking agents may be used individually or in combination of two or more thereof. Among these co-crosslinking agents, the polyfunctional (iso)cyanurate, the polyfunctional (meth)acrylate, and the bismaleimides (arene bismaleimide or aromatic bismaleimide such as N,N'-m-phenylene dimaleimide) are preferred, and the bismaleimides are often used.

A ratio of the co-crosslinking agent (crosslinking aid) such as the bismaleimides may be, for example, about 0.1 parts by mass to 15 parts by mass (for example, about 0.5 parts by mass to 1.5 parts by mass), and preferably about 5 parts by mass to 15 parts by mass (for example, about 7 parts by mass to 13 parts by mass) in terms of solid content with respect to 100 parts by mass of the rubber component. If the content of the co-crosslinking agent (crosslinking aid) (particularly the bismaleimides and the like) is too small, it may be difficult to improve mechanical properties.

Examples of the crosslinking accelerator (or vulcanization accelerator) include thiuram accelerators [for example, tetramethylthiuram monosulfide (TMTM), tetramethylthiuram disulfide (TMTD), tetraethylthiuram disulfide (TETD), tetrabutylthiuram disulfide (TBTD), dipentamethylenethiuram tetrasulfide (DPTT), and N,N'-dimethyl-N,N'-diphenylthiuram disulfide], thiazole accelerators [for example, 2-mercaptobenzothiazole, a zinc salt of 2-mercaptobenzothiazole, 2-mercaptothiazoline, dibenzothiazyl disulfide (MBTS), and 2-(4'-morpholinodithio)benzothiazole], sulfenamide accelerators [for example, N-cyclohexyl-2-benzothiazyl sulfenamide (CBS), and N,N'-dicyclohexyl-2-benzothiazyl sulfenamide], guanidines (diphenyl guanidine, di-o-tolyl guanidine, or the like), urea or thiourea accelerators (for example, ethylene thiourea), dithiocarbamates, and xanthates. These crosslinking accelerators (or vulcanization accelerators) may be used individually or in combination of two or more thereof. Among these crosslinking accelerators (or vulcanization accelerators), TMTD, CBS, MBTS, and the like are preferable.

A ratio of the crosslinking accelerator (or vulcanization accelerator) may be, for example, about 0 parts by mass to 15 parts by mass (for example, 0.1 parts by mass to 10 parts by mass), preferably about 0 parts by mass to 5 parts by mass (for example, about 1 part by mass to 4 parts by mass), and more preferably about 0 parts by mass in terms of solid content with respect to 100 parts by mass of the rubber component.

A ratio of the metal oxide (such as zinc oxide) may be, for example, about 1 part by mass to 20 parts by mass (for example, about 2 parts by mass to 10 parts by mass), and preferably about 3 parts by mass to 7 parts by mass in terms of solid content with respect to 100 parts by mass of the rubber component.

A ratio of the softener (oils such as paraffinic oil) may be, for example, about 1 part by mass to 30 parts by mass (for example, about 2 parts by mass to 5 parts by mass), preferably about 5 parts by mass to 15 parts by mass in terms of solid content with respect to 100 parts by mass of the rubber component. If the content of the softener (particularly oils such as paraffinic oil) is too small, there is a concern that the adhesiveness is reduced and the tie band or the cover fabric is easily peeled off.

A ratio of the processing agent or the processing aid (such as stearic acid) may be, for example, about 10 parts by mass or less (for example, about 0 parts by mass to 10 parts by mass), and preferably about 0.1 parts by mass to 5 parts by mass (for example, about 0.5 parts by mass to 1.5 parts by mass) in terms of solid content with respect to 100 parts by mass of the rubber component.

A ratio of the adhesiveness improver (such as resorcinol-formaldehyde co-condensate, and hexamethoxymethyl melamine) may be, for example, about 0 parts by mass to 20 parts by mass (for example, about 0 parts by mass to 10 parts by mass), preferably about 0 parts by mass to 5 parts by mass, and more preferably about 0 parts by mass in terms of solid content with respect to 100 parts by mass of the rubber component.

Examples of the anti-aging agent include a benzimidazole-based anti-aging agent (for example, 2-mercaptobenzimidazole (MBI), 2-mercaptomethylbenzimidazole, and a metal salt such as a zinc salt thereof), and an aromatic secondary amine-based anti-aging agent [for example, 4,4'-dioctyldiphenylamine (ODPA), and 4,4'-bis(α,α-dimethylbenzyl)diphenylamine (DCD)]. These anti-aging agents may be used individually or in combination of two or more thereof. Among these anti-aging agents, MBI and ODPA are preferable.

A ratio of the anti-aging agent may be, for example, about 0 parts by mass to 15 parts by mass (for example, about 0.1 parts by mass to 1 part by mass), and preferably about 2 parts by mass to 4 parts by mass in terms of solid content with respect to 100 parts by mass of the rubber component.

An average thickness of the tension rubber layer may be, for example, about 0.5 mm to 10 mm (for example, about 0.5 mm to 1.5 mm), preferably about 0.6 mm to 5 mm, and more preferably about 0.7 mm to 3 mm (particularly about 1 mm to 2 mm), and may be appropriately adjusted according to the number of layers of the cover fabric.

### (Compression rubber layer)

The compression rubber layer may be formed of a vulcanized or crosslinked rubber composition (crosslinked rubber composition containing a rubber component) commonly used as a rubber composition of a wrapped V-belt.

Examples of the rubber component in the crosslinked rubber composition forming the compression rubber layer include rubber components similar to the rubber components exemplified in the section of the tension rubber layer, including preferred embodiments thereof. The rubber component in the crosslinked rubber composition forming the compression rubber layer is preferably a rubber component of the same type (particularly the same) as the rubber component in the crosslinked rubber composition forming the tension rubber layer.

In addition to the rubber component, the crosslinked rubber composition forming the compression rubber layer may or may not contain a common additive as necessary. Examples of the additive include additives similar to the additives exemplified in the section of the tension rubber layer, including preferred embodiments thereof.

The crosslinked rubber compositions forming the compression rubber layer and the tension rubber layer may be the same as or different from each other. When the crosslinked rubber composition forming the compression rubber layer contains short fibers, the short fibers may be oriented in the belt width direction and embedded in the rubber composition (rubber layer) in order to prevent compressive deformation of the belt against pressure from the pulley (from the viewpoint of improving lateral pressure resistance).

The compression rubber layer may be of a single layer, or may be formed of a plurality of layers (for example, two or more layers, preferably about two layers to three layers) as necessary. When the compression rubber layer is formed of a plurality of layers, in terms of productivity, the compression rubber layer may preferably be formed of two layers of a first compression rubber layer on the outer peripheral side [tension member layer (adhesive rubber layer) side] of the belt and a second compression rubber layer on the inner peripheral side. In addition, when the compression rubber layer is formed of a plurality of layers, the crosslinked rubber compositions forming the respective compression rubber layers may be the same or different from each other, and preferably the rubber components in the crosslinked rubber compositions may be of the same type (particularly, the same). From the viewpoint of improving lateral pressure resistance, the first compression rubber layer on the outer peripheral side [tension member layer (adhesive rubber layer) side] of the belt may be formed of a crosslinked rubber composition having a hardness higher than that of the second compression rubber layer on the inner peripheral side, and specifically, the hardness of each compression rubber layer may be adjusted by adjusting the type and amount of the additives in the crosslinked rubber composition [for example, the filler, the short fiber, the crosslinking agent (or vulcanization agent), the co-crosslinking agent or crosslinking aid (or vulcanization aid), the crosslinking accelerator (or vulcanization accelerator), the metal oxide, the softener, the processing agent or processing aid, and the plasticizer].

An average thickness of the entire compression rubber layer may be, for example, about 1 mm to 12 mm, preferably about 2 mm to 10 mm, and more preferably about 3 mm to 8 mm (particularly about 4.5 mm to 6 mm), and may be appropriately adjusted according to the number of layers of the cover fabric. When the compression rubber layer has a two-layer structure, the average thickness of the first compression rubber layer on the outer peripheral side of the belt may be, for example, about 10 % to 90% (for example, about 10% to 60%), and preferably about 15% to 50% (for example, about 20% to 40%) with respect to the average thickness of the entire compression rubber layer.

### (Tension Member Layer, Adhesive Rubber Layer)

The tension member layer may include the tension member, and may be a tension member layer formed of only the tension member as described above. In the present application, when the tension member layer is formed only of the tension members, the tension members disposed at intervals in the belt main body portion are referred to as the tension member layer, and such a tension member layer includes not only a form in which the tension members are disposed at an interface between the tension rubber layer and the compression rubber layer, but also a form in which a part or all of the tension members disposed at the interface between the tension rubber layer and the compression rubber layer are embedded in the tension rubber layer or the compression rubber layer in a manufacturing process.

The tension member layer may be a tension member layer (adhesive rubber layer) formed of a crosslinked (vulcanized) rubber composition containing the tension members in terms of preventing interlayer peeling and improving belt durability. The tension member layer formed of the crosslinked rubber composition containing the tension members is generally referred to as the adhesive rubber layer, and the tension members are embedded in the layer formed of the crosslinked rubber composition containing the rubber component. The adhesive rubber layer is interposed between the tension rubber layer and the compression rubber layer to adhere the tension rubber layer, the compression rubber layer, and the tension members. In the present application, the tension member layer (adhesive rubber layer) includes not only a form in which all of the tension members are embedded in the adhesive rubber layer, but also a form in which the tension members are disposed at an interface between the adhesive rubber layer and the tension rubber layer or the compression rubber layer in the manufacturing process.

### Tension Member

The tension members included in the tension member layer are preferably cords (twisted cords) arranged at predetermined intervals in the belt width direction. The cords are arranged to extend in the length direction of the belt, and are generally arranged to extend in parallel at a predetermined pitch parallel to the length direction of the belt. When the tension member (cord) is embedded in the adhesive rubber layer, it is sufficient that only a part of the tension member is embedded in the adhesive rubber layer, and in terms of improving durability, the cord may be embedded in the adhesive rubber layer (the entire cord is completely embedded in the adhesive rubber layer).

Examples of fibers constituting the cord include the fibers exemplified as the fibers constituting the fabric in the section of the cover fabric. These fibers may be used individually or in combination of two or more thereof.

Among these fibers, in terms of high modulus, synthetic fibers such as polyester fibers (polyalkylene arylate fibers) having C₂₋₄ alkylene-C₆₋₁₄ arylate such as ethylene terephthalate and ethylene-2,6-naphthalate as main constituent units, and polyamide fibers (aramid fibers and the like), and inorganic fibers such as carbon fibers are generally used, and polyester fibers (particularly, polyethylene terephthalate fibers and polyethylene naphthalate fibers) and polyamide fibers (particularly, aramid fibers) are preferred, and polyamide fibers such as aramid fibers are more preferable.

These fibers may be used in the form of a multifilament yarn including a plurality of filaments. A fineness of the multifilament yarn may be, for example, about 1000 dtex to 3000 dtex (for example, about 1200 dtex to 2000 dtex). The multifilament yarn may contain, for example, about 100 filaments to 3000 filaments (for example, about 500 filaments to 2000 filaments), and preferably 700 filaments to 1300 filaments.

As the cord, generally, a twisted cord including the multifilament yarn (for example, a plied cord, a single twisted cord or Lang twisted cord, and the piled cord is preferable) can be used. An average wire diameter of the cord (diameter of twisted cord) may be, for example, about 0.5 mm to 3 mm, preferably about 0.6 mm to 2.5 mm, and more preferably about 0.7 mm to 2 mm. A total fineness of the twisted cord may be, for example, about 10000 dtex to 50000 dtex (for example, about 22000 dtex to 28000 dtex). The twisted cord may include, for example, about 1000 filaments to 30000 filaments (for example, about 5000 filaments to 25000 filaments), and preferably about 10000 filaments to 20000 filaments (for example, 12000 filaments to 18000 filaments). In the twisted cord, a twist coefficient of a primary twisted yarn may be, for example, about 2 to 4 (for example, about 2.5 to 3.5), and a twist coefficient of a secondary twisted yarn may be, for example, about 2 to 4 (for example, 2.5 to 3.5).

When the cord is embedded in the adhesive rubber layer, the cord may be subjected to a common adhesion treatment (or surface treatment) [for example, treatment with a treatment liquid containing an adhesive component] in order to improve the adhesiveness with the crosslinked rubber composition forming the adhesive rubber layer. Examples of the adhesive component (or surface treatment agent) used in the adhesion treatment include components similar to those exemplified in the section of the cover fabric. These adhesive components may be used individually or in combination of two or more thereof, and the adhesion treatment may be performed a plurality of times sequentially with the same or different adhesive components.

The adhesive rubber layer may be formed of a vulcanized or crosslinked rubber composition (crosslinked rubber composition containing a rubber component) commonly used as a rubber composition of a wrapped V-belt.

Examples of the rubber component in the crosslinked rubber composition forming the adhesive rubber layer include rubber components similar to the rubber components exemplified in the section of the tension rubber layer, including preferred embodiments thereof. The rubber component in the crosslinked rubber composition forming the adhesive rubber layer is preferably a rubber component of the same type (particularly the same) as the rubber component in a crosslinked rubber composition forming the tension rubber layer and/or the compression rubber layer.

In addition to the rubber component, the crosslinked rubber composition forming the adhesive rubber layer may or may not contain a common additive as necessary. Examples of the additive include additives similar to the additives exemplified in the section of the tension rubber layer, including preferred embodiments thereof.

An average thickness of the adhesive rubber layer may be, for example, about 0.2 mm to 5 mm (for example, about 0.3 mm to 3 mm), preferably about 0.3 mm to 2 mm (for example, about 0.5 mm to 1.5 mm), and may be appropriately adjusted according to the number of layers of the cover fabric.

### (Reinforcing Fabric Layer)

The belt main body portion may include a reinforcing fabric layer laminated on the inner peripheral surface (surface on the inner peripheral side) side of the compression rubber layer as necessary. That is, each wrapped V-belt portion may or may not further include a reinforcing fabric layer between the inner peripheral surface (surface on the inner peripheral side) of the compression rubber layer and the cover fabric as necessary.

The reinforcing fabric layer may be formed of, for example, a common fabric, and the fabric may be similar to the fabric exemplified in the section of the cover fabric, including preferred embodiments thereof.

The fabric forming the reinforcing fabric layer may be subjected to a common adhesion treatment (or surface treatment) [for example, treatment with a treatment liquid containing an adhesive component] in order to improve the adhesiveness with the compression rubber layer and the cover fabric. Examples of the adhesive component (or surface treatment agent) used in the adhesion treatment include components similar to those exemplified in the section of the cover fabric. These adhesive components may be used individually or in combination of two or more thereof, and the adhesion treatment may be performed a plurality of times sequentially with the same or different adhesive components. A preferred fabric is a fabric with the rubber component adhered thereto, and may be, for example, a fabric subjected to an adhesion treatment such as a treatment of soaking (immersing) a fabric in a rubber paste obtained by dissolving the rubber composition containing the rubber component in a solvent, or a treatment of frictioning (rubbing) the solid rubber composition into a fabric, and examples of the rubber composition include rubber compositions similar to the rubber compositions in the section of the cover fabric, including the preferred embodiments thereof. In the adhesion treatment, at least one surface of the fabric may be treated, and it is preferable to treat at least a surface that comes into contact with the compression rubber layer, and particularly preferable to treat both surfaces.

An average thickness of the reinforcing fabric layer is, for example, about 0.4 mm to 2 mm, preferably about 0.5 mm to 1.4 mm, and more preferably about 0.6 mm to 1.2 mm. If the thickness of the reinforcing fabric layer is too thin, there is a concern that the wear resistance is reduced, and if the thickness is too thick, there is a concern that the bendability of the belt is reduced.

### [Tie Band (Joining Member)]

As the tie band, a tie band of a common joined V-belt can be used, and examples thereof include a rubber composition (a crosslinked rubber composition containing a rubber component), a woven fabric such as canvas, a fibrous structure such as sudare (open-mesh woven fabric) and net (network structure or mesh), and a combination thereof. The tie band preferably contains at least fibers in terms of effectively preventing breakage of the wrapped joined V-belt.

When the tie band contains fibers, generally, the adhesive force (peeling force) with the wrapped V-belt portion is likely to decrease, but in the wrapped joined V-belt according to the present invention, since a high adhesive force can be secured with the uncovered area of the outer peripheral surface of the wrapped V-belt portion, it is possible to achieve both adhesiveness and breakage resistance, and it is possible to effectively improve the durability of the wrapped joined V-belt.

The tie band containing fibers may be, for example, a rubber composition containing short fibers (for example, a rubber composition containing the rubber component and short fibers exemplified in the section of the tension rubber layer), but preferably contains at least the fibrous structure (particularly, canvas, sudare, and the like). Therefore, the tie band may include at least a connection reinforcing layer including the fibrous structure, and may include a protective layer laminated on the outer peripheral side of the connection reinforcing layer as necessary.

### (Connection Reinforcing Layer)

The connection reinforcing layer may include at least the fibrous structures (or fabric), and the fibrous structures may be used individually or in combination of two or more thereof. Among the fibrous structures, the open-mesh woven fabric is preferable in terms of the open-mesh woven fabric being capable of achieving both prevention of breakage and bendability (flexibility) in the belt length direction, and being excellent in balance with productivity.

Among the open-mesh woven fabrics, it is preferable to use an open-mesh woven fabric including a plurality of filamentous bodies extending in the belt width direction in terms of further improving the resistance force against the tensile force acting in the belt width direction, and it is particularly preferable to use an open-mesh woven fabric including a plurality of first filamentous bodies (thread bodies) extending in the belt width direction and a plurality of second filamentous bodies having a lower yarn density (arrangement density) than the plurality of first filamentous bodies and extending in a direction intersecting the belt width direction.

In the present application, the filamentous body extending in the belt width direction means a filamentous body extending substantially parallel to the belt width direction. Furthermore, "substantially parallel" means that an angle formed by a direction in which the filamentous body extends and the belt width direction is, for example, about 10° or less (for example, 0° to 5°), preferably about 3° or less (for example, 0° to 1°, particularly substantially 0°).

A yarn density (the number of yarns per 5 cm in the belt length direction) of the first filamentous body is, for example, 10 yarns/50 mm to 300 yarns/50 mm, preferably 50 yarns/50 mm to 200 yarns/50 mm, more preferably 80 yarns/50 mm to 180 yarns/50 mm, even more preferably 100 yarns/50 mm to 150 yarns/50 mm, and most preferably 110 yarns/50 mm to 130 yarns/50 mm.

A yarn density of the second filamentous body is, for example, 1 yarn/50 mm to 30 yarns/50 mm, preferably 2 yarns/50 mm to 10 yarns/50 mm, more preferably 2 yarns/50 mm to 8 yarns/50 mm, even more preferably 3 yarns/50 mm to 7 yarns/50 mm, and most preferably 4 yarns/50 mm to 6 yarns/50 mm.

Examples of fibers constituting the first and second filamentous bodies include the fibers exemplified as the fibers constituting the fabric in the section of the cover fabric. Among the fibers, as the first filamentous bodies, polyester fibers and polyamide fibers are preferred, and aliphatic polyamide fibers such as polyamide 66 fibers are particularly preferred. As the second filamentous bodies, cellulosic fibers are preferred, and cellulose fibers such as cotton fibers are particularly preferred.

When the first filamentous bodies are polyester fibers or polyamide fibers, the fineness of the first filamentous bodies (total fineness in the case of multifilament yarn or the like) is, for example, 100 dtex to 1000 dtex, preferably 200 dtex to 800 dtex, and more preferably 400 dtex to 600 dtex.

When the second filamentous bodies are cellulose fibers such as cotton fibers, a thickness (counts) of the second filamentous bodies is, for example, about 5 counts to 100 counts, preferably about 10 counts to 80 counts, and more preferably about 30 counts to 50 counts.

The fibrous structure may be subjected to a common adhesion treatment (or surface treatment) [for example, treatment with a treatment liquid containing an adhesive component] in order to improve the adhesiveness to a rubber component (crosslinked rubber composition) or the like. Examples of the adhesive component (or surface treatment agent) used in the adhesion treatment include components similar to those exemplified in the section of the cover fabric. These adhesive components may be used individually or in combination of two or more thereof, and the adhesion treatment may be performed a plurality of times sequentially with the same or different adhesive components.

An average thickness of the fibrous structure is, for example, about 0.1 mm to 0.5 mm, preferably about 0.2 mm to 0.4 mm. If the thickness of the fibrous structure is too thin, there is a concern of interlayer peeling or breakage, and if the thickness is too thick, there is a concern that the bendability of the belt decreases.

The connection reinforcing layer may be formed of a fibrous structure (for example, a fabric subjected to an adhesion treatment of a rubber component or the like), but from the viewpoint of preventing peeling of the fibrous structure and preventing peeling between layers (between the wrapped V-belt portion and/or the protective layer) and preventing breakage (including preventing propagation of defects), an aspect in which the fibrous structure is sandwiched by a rubber composition containing a rubber component (connection reinforcing layer sandwiching rubber) (an aspect in which the fibrous structure is embedded in a crosslinked rubber composition) is preferable.

Examples of the rubber component constituting the crosslinked rubber composition of the connection reinforcing layer include rubber components similar to the rubber components exemplified in the section of the tension rubber layer, including preferred embodiments thereof. The rubber component in the crosslinked rubber composition forming the connection reinforcing layer is preferably a rubber component of the same type (for example, the same) as the rubber component in a crosslinked rubber composition forming the tension rubber layer and/or the compression rubber layer, and preferably contains, for example, an ethylene-α-olefin elastomer such as EPDM.

A content of ethylene (ratio of ethylene units) in the ethylene-α-olefin elastomer may be about 25 mass% or more (for example, about 30 mass% to 70 mass%), and preferably about 35 mass% to 55 mass% (for example, about 40 mass% to 50 mass%). When the ethylene content is too large, there is a concern that processability and crack resistance are deteriorated.

The ratio (mass ratio) of ethylene to α-olefin is, for example, the former/the latter = 30/70 to 70/30, preferably 40/60 to 60/40, and more preferably 45/55 to 55/45.

The diene content (particularly ethylidene norbornene content) of the ethylene-α-olefin elastomer (particularly an ethylene-α-olefin-diene terpolymer such as EPDM) is, for example, 0.1 mass% to 15 mass%, preferably 1 mass% to 12 mass% (for example, 5 mass% to 10 mass%), and more preferably 6 mass% to 9 mass% (for example, 7 mass% to 8 mass%). If the diene content is too large, a high heat resistance may not be ensured. If the diene content is too small, processability and crack resistance may decrease.

A Mooney viscosity [ML(1 + 4)100°C] of the uncrosslinked ethylene-α-olefin elastomer may be, for example, about 10 to 85 (for example, about 30 to 60), preferably about 35 to 55 (for example, about 40 to 50). When the Mooney viscosity is too high, processability and crack resistance may decrease.

In the present application, the Mooney viscosity [ML(1 + 4)100°C] can be measured by a method in accordance with JIS K 6300-1(2013), and test conditions include a test temperature of 100°C, preheating of 1 minute, and a rotor operating time of 4 minutes using an L-shaped rotor. The Mooney viscosity is used as an index representing fluidity (ease of processing) of rubber by filling the cavity with the uncrosslinked ethylene-α-olefin elastomer so as to be in contact with a rotor provided with grooves on its surface, and measuring a torque necessary for rotating the rotor.

In addition to the rubber component, the crosslinked rubber composition of the connection reinforcing layer may or may not contain a common additive, if necessary. Examples of the additive include additives similar to the additives exemplified in the section of the tension rubber layer, and it is preferable to include a filler, a crosslinking agent (or vulcanization agent), a crosslinking accelerator (or vulcanization accelerator), a metal oxide, a processing agent or a processing aid, an adhesiveness improver, and an anti-aging agent. These additives may be used individually or in combination of two or more thereof.

The filler in the crosslinked rubber composition of the connection reinforcing layer is preferably a reinforcing filler such as carbon black (hard carbon such as HAF) or silica. A ratio of the filler (particularly the reinforcing filler) with respect to 100 parts by mass of the rubber component may be, for example, about 30 parts by mass to 80 parts by mass, preferably about 40 parts by mass to 70 parts by mass (for example, about 50 parts by mass to 60 parts by mass). A ratio of the reinforcing filler with respect to the entire filler may be, for example, 50 mass% or more, preferably 75 mass% or more (for example, 80 mass% or more), more preferably 90 mass% or more, and may be 100 mass%. A ratio of the carbon black (particularly hard carbon) with respect to 100 parts by mass of the rubber component may be, for example, about 20 parts by mass to 50 parts by mass (for example, about 25 parts by mass to 45 parts by mass), preferably about 30 parts by mass to 40 parts by mass. A ratio of the silica with respect to 100 parts by mass of the rubber component may be, for example, about 5 parts by mass to 40 parts by mass (for example, about 8 parts by mass to 35 parts by mass), preferably about 10 parts by mass to 30 parts by mass (for example, 15 parts by mass to 25 parts by mass). When both carbon black (particularly hard carbon) and silica are contained, a ratio of the former to the latter (mass ratio) may be, for example, about 45/55 to 80/20, preferably about 55/45 to 70/30.

The crosslinking agent (or vulcanization agent) in the crosslinked rubber composition of the connection reinforcing layer is preferably a sulfur-based vulcanization agent. A ratio of the crosslinking agent (or vulcanization agent) (particularly the sulfur-based vulcanization agent) may be, for example, about 0.1 parts by mass to 3 parts by mass (for example, about 0.3 parts by mass to 2 parts by mass), preferably about 0.5 parts by mass to 1.5 parts by mass in terms of solid content with respect to 100 parts by mass of the rubber component, depending on the types of the crosslinking agent (or vulcanization agent) and the rubber component.

The crosslinking accelerator (or vulcanization accelerator) in the crosslinked rubber composition of the connection reinforcing layer is preferably MBTS or the like. A ratio of the crosslinking accelerator (or vulcanization accelerator) may be, for example, about 0.1 parts by mass to 3 parts by mass (for example, about 0.3 parts by mass to 2 parts by mass), and preferably about 0.5 parts by mass to 1.5 parts by mass in terms of solid content with respect to 100 parts by mass of the rubber component.

A ratio of the metal oxide (such as zinc oxide) in the crosslinked rubber composition of the connection reinforcing layer may be, for example, about 1 part by mass to 20 parts by mass (for example, about 2 parts by mass to 10 parts by mass), and preferably about 3 parts by mass to 7 parts by mass in terms of solid content with respect to 100 parts by mass of the rubber component.

A ratio of the processing agent or the processing aid (such as stearic acid) in the crosslinked rubber composition of the connection reinforcing layer may be, for example, about 10 parts by mass or less (for example, about 0 parts by mass to 10 parts by mass), and preferably about 0.1 parts by mass to 5 parts by mass (for example, about 0.5 parts by mass to 1.5 parts by mass) in terms of solid content with respect to 100 parts by mass of the rubber component.

A ratio of the adhesiveness improver (such as resorcinol-formaldehyde co-condensate, and hexamethoxymethyl melamine) in the crosslinked rubber composition of the connection reinforcing layer may be, for example, about 0.1 parts by mass to 20 parts by mass (for example, about 1 part by mass to 10 parts by mass), and preferably about 2 parts by mass to 8 parts by mass (for example, about 3 parts by mass to 5 parts by mass) in terms of solid content with respect to 100 parts by mass of the rubber component.

The anti-aging agent in the crosslinked rubber composition of the connection reinforcing layer is preferably DCD. A ratio of the anti-aging agent may be, for example, about 0.1 parts by mass to 15 parts by mass (for example, about 1 part by mass to 3 parts by mass), and preferably about 1.5 parts by mass to 2.5 parts by mass in terms of solid content with respect to 100 parts by mass of the rubber component.

The connection reinforcing layer can be used individually (single layer) or in combination of two or more, but is preferably used individually (single layer).

An average thickness of the connection reinforcing layer is, for example, about 0.4 mm to 1.4 mm, and preferably about 0.5 mm to 1 mm. If the thickness of the fabric layer is too thin, there is a concern of interlayer peeling or breakage, and if the thickness is too thick, there is a concern that the bendability of the belt decreases.

### (Protective Layer)

The tie band (joining member) may be formed of only the connection reinforcing layer, but may include a protective layer laminated on the connection reinforcing layer (on the outer peripheral surface side of the belt or the outermost layer) in terms of effectively preventing damage to the fibrous structure in the connection reinforcing layer (for example, damage due to foreign matter from the back surface of the belt).

The protective layer may be formed of a rubber sheet of a common crosslinked rubber composition (for example, a rubber sheet of a rubber composition containing short fibers), or may be formed of a common fabric (for example, the fabric exemplified in the section of the cover fabric). These protective layers may be used individually or in combination of two or more thereof. Among these protective layers, a protective layer formed of a crosslinked rubber composition is preferable.

Examples of the rubber component in the crosslinked rubber composition of the protective layer include rubber components similar to the rubber components exemplified in the section of the tension rubber layer, including preferred embodiments thereof. The rubber component in the crosslinked rubber composition forming the protective layer is preferably a rubber component of the same type (particularly the same) as the rubber component in the crosslinked rubber composition forming the tension rubber layer.

In addition to the rubber component, the crosslinked rubber composition forming the protective layer may or may not contain a common additive as necessary. Examples of the additive include additives similar to the additives exemplified in the section of the tension rubber layer, including preferred embodiments thereof.

The crosslinked rubber compositions forming the protective layer and the tension rubber layer may be the same as or different from each other. When the crosslinked rubber composition forming the protective layer contains short fibers, the short fibers may be oriented in the belt width direction and embedded in the rubber composition (rubber layer) from the viewpoint of improving the breakage resistance and improving the wear resistance when the belt back surface is brought into contact with a flange portion such as an idler pulley or a tensioner on the back surface of the belt.

An average thickness of the protective layer is, for example, about 0.4 mm to 2 mm, preferably about 0.8 mm to 1.8 mm, and more preferably about 1 mm to 1.5 mm. If the thickness of the protective layer is too thin, the effect of preventing damage to the fibrous structure may decrease, and if the thickness is too thick, the bendability of the belt may decrease.

The tie band (joining member) may include a plurality of protective layers (for example, two layers to three layers) as necessary, but preferably includes one layer.

### [Manufacturing Method of Wrapped Joined V-Belt]

The wrapped joined V-belt is obtained by manufacturing an uncrosslinked (unvulcanized) wrapped V-belt portion (wrapped V-belt portion precursor), and then performing a connecting step of connecting a plurality of the obtained unvulcanized wrapped V-belt portions (wrapped V-belt portion precursors) with a tie band (tie band precursor).

As a method for manufacturing an uncrosslinked (unvulcanized) wrapped V-belt portion (wrapped V-belt portion precursor), for example, a method described in JPH06-137381A and WO2015/104778 pamphlet can be used. Specifically, the unvulcanized wrapped V-belt portion (wrapped V-belt portion precursor) can be obtained through a winding step of cutting an unvulcanized compression rubber layer sheet obtained by rolling and setting the cut sheet in a mantle, winding an unvulcanized first adhesive rubber layer sheet on the compression rubber layer sheet, then winding a tension member on the wound first adhesive rubber layer sheet, and further winding an unvulcanized second adhesive rubber layer sheet and an unvulcanized tension rubber layer sheet in this order on the wound tension member, a cutting step of cutting (slicing) the obtained annular laminate on the mantle, a skiving step (skive step) of spanning the cut annular laminate over a pair of pulleys and cutting the cut annular laminate into a V shape while rotating the cut annular laminate, and a cover fabric covering step (covering step or cover winding treatment) of covering the periphery of the obtained unvulcanized belt main body portion (belt main body portion precursor) with a cover fabric precursor [for example, a cover fabric (fabric) with the uncrosslinked rubber composition adhered thereto].

In the winding step, when the compression rubber layer is formed of a plurality of layers, a laminated sheet obtained by laminating a plurality of compression rubber layer sheets may be cut and set in the mantle, and only one of the first and second adhesive rubber layer sheets may be wound, or neither may be wound (the adhesive rubber layer may not be formed).

A manufacturing method of the wrapped joined V-belt according to the present invention includes: at least, the covering step of covering the belt main body portion precursor with the cover fabric precursor to form the wrapped V-belt portion precursor, and the connecting step of connecting outer peripheral surfaces of the plurality of the wrapped V-belt portion precursors obtained in the covering step with the tie band precursor [for example, a tie band containing fibers (particularly, the fibrous structure) and the uncrosslinked rubber composition], in which in the covering step, at least the inner peripheral surface and both side surfaces of the belt main body portion precursors are covered, at least the partial area (the uncovered area) of the outer peripheral surface is not covered, and the manufacturing method may not include the removal step (a step described in Patent Literatures 2 and 3) of cutting or removing the cover fabric precursor covering the outer peripheral surface side of each of the wrapped V-belt portion precursors obtained in the covering step. Therefore, a wrapped joined V-belt that can omit a step, is excellent in wear resistance, and can prevent peeling of a tie band can be manufactured at low cost with high productivity.

In the manufacturing method according to the present invention, a wrapped joined V-belt of an aspect in which the entire outer peripheral surface of the wrapped V-belt portion is the uncovered area (an aspect not including the covered area) can also be manufactured easily or efficiently, but in terms of manufacturing with even higher productivity, it is preferable to manufacture the wrapped joined V-belt having the covered area and the uncovered area.

In the covering step, the inner peripheral surface, both side surfaces, and at least one side portion (an area corresponding to the covered area, preferably both side portions) of the outer peripheral surface of the belt main body portion precursor may be at least covered with a seamless (continuous) cover fabric precursor. The width of the cover fabric precursor may be shorter than the perimeter length of the cross-sectional shape perpendicular to the length direction of the belt main body portion precursor (that is, the total length of the dimensions of the inner peripheral surface, both side surfaces, and outer peripheral surface in the cross-sectional shape), or may be longer than the total length of the dimensions of the inner peripheral surface and both side surfaces in the cross-sectional shape according to the area ratio of the uncovered area or the like. The belt main body portion precursor may be covered such that the width direction of the cover fabric precursor is directed in a direction perpendicular to the belt length direction (the length direction of the cover fabric precursor is directed in the belt length direction).

In the related art, when covering the belt main body portion precursor with the cover fabric precursor, for example, when covering as illustrated in Fig. 2, the belt main body portion precursor is wound around two pulleys and is caused to rotate (run), the cover fabric precursor wound in a roll shape is brought into contact (pressed against) with the outer peripheral surface side of the rotating belt main body portion precursor while being fed, a roller is pressed so that the cover fabric precursor in contact with the outer peripheral surface side follows the shape of the belt main body portion precursor (while the cover fabric precursor is fed, a roller is applied from the outside to roll the cover fabric precursor into a cylindrical shape like a pipe conveyor, so as to wrap around the belt main body portion precursor), and the cover fabric precursor is overlapped on the inner peripheral side, whereby the wrapped V-belt portion precursor can be formed.

Meanwhile, in the present invention, the belt main body portion precursor is caused to rotate (run) between two pulleys with the inner peripheral side and the outer peripheral side reversed as compared with the related method (with a wider surface facing the inner peripheral side and a narrower surface facing the outer peripheral side), thereby enabling covering with the cover fabric precursor having a predetermined width (as described above, the continuous cover fabric precursor having a width shorter than the perimeter length of the cross-sectional shape perpendicular to the length direction of the belt main body portion precursor). That is, by bringing the cover fabric precursor having a predetermined width into contact with the narrower surface on an outer peripheral side of the rotating belt main portion precursor (a surface on the inner peripheral side of the wrapped V-belt portion) and pressing the cover fabric precursor with a roller so as to follow the shape of the belt main body portion precursor as in the related art, both side surfaces and the wider surface on the inner peripheral side (a surface on the outer peripheral side of the wrapped V-belt portion) are covered, but since the width of the cover fabric precursor is shorter than the perimeter length, at least one side portion (corresponding to the covered area) is covered and an area that is not covered (corresponding to the uncovered area) is formed on the wide surface on the inner peripheral side (the surface on the outer peripheral side of the wrapped V-belt portion).

As described above, when the wrapped V-belt portion precursor in which the entire surface on the outer peripheral side of the belt is the uncovered area is manufactured using the seamless cover fabric precursor, it is considered that it is difficult to align the cover fabric precursor (align both end portions in the width direction of the cover fabric precursor and both end portions of the outer peripheral surface of the belt main body portion precursor) for the following reason. First, since the cover fabric precursor becomes sticky due to the adhesion treatment, once the cover fabric precursor is pressed against the belt main body portion precursor, the position cannot be adjusted. In addition, since the belt main body portion precursor is an uncrosslinked rubber composition, the belt main body portion precursor is soft and tends to have a distorted shape in the skive step or the like. Therefore, when the cover fabric precursor is pressed against the belt main body portion precursor, it is difficult to cause the belt main body portion precursor to run straight (the belt main body portion precursor is likely to meander), and misalignment with the cover fabric precursor is likely to occur. Furthermore, in a crosslinking molding treatment (crosslinking molding step) described below, it is considered that the rubber composition flows in a mold due to pressurization or the like, resulting in misalignment. Therefore, when an attempt is made to manufacture a wrapped joined V-belt in which the entire surface on the outer peripheral side of the belt is the uncovered area (ratio of the uncovered area is 100%), a portion where the side surface is not covered with the cover fabric is likely to occur in the belt length direction due to the influence of misalignment, and the defect rate tends to increase.

However, as in the covering step described above, by adjusting the width of the cover fabric precursor to the predetermined length and folding the end portion of the cover fabric precursor toward the side portion of the outer peripheral surface in at least one side portion (preferably both side portions) while covering the inner peripheral surface and both side surfaces of the belt, it is possible to effectively prevent the occurrence of the portion that is not covered with the cover fabric on the side surface of the belt, and since the removal step can be reduced and no material loss occurs, a wrapped V-belt portion precursor can be manufactured easily or efficiently with high productivity. In addition, in the obtained wrapped V-belt portion precursor, not only the adhesiveness to the tie band can be improved by the uncovered area, but also, since the covered area is formed in a form of being folded from the side surface in at least one side portion (preferably both side portions) of the outer peripheral surface, peeling of the cover fabric from the boundary portion with the tie band can be effectively prevented.

When covering is endlessly performed with the seamless cover fabric precursor, one end portion and the other end portion of the cover fabric precursor in the length direction may be adjacent to each other without overlapping, or may be partially overlapped, or both end portions in the length direction may be partially overlapped to perform covering endlessly.

The wrapped V-belt portion precursor obtained in the covering step may be connected to the tie band precursor (for example, a tie band containing an uncrosslinked rubber composition) by a common method (connecting step). For example, after a plurality of unvulcanized wrapped V-belt portions (wrapped V-belt portion precursors) are fitted into grooves having an inverted trapezoidal cross-sectional shape formed in a tubular or annular lower vulcanization mold, the tie band precursor is set in a portion on an outer side in a radial direction. When setting the tie band precursor, the tie band precursor is wound around the plurality of unvulcanized wrapped V-belt portions arranged in the width direction along the circumferential direction. The tie band precursor and the plurality of unvulcanized wrapped V-belt portions (wrapped V-belt portion precursors) set as described above are subjected to the crosslinking molding treatment (vulcanization treatment) [crosslinking molding step (vulcanization step)] in which the tie band precursor and the plurality of unvulcanized wrapped V-belt portions are interposed between an upper vulcanization mold and the lower vulcanization mold and crosslinked or vulcanized while being pressurized. By this crosslinking molding treatment (vulcanization treatment), a crosslinked sleeve (vulcanized sleeve) in which the plurality of wrapped V-belt portions are connected and joined by the tie band is formed. The crosslinked sleeve (vulcanized sleeve) formed in this manner is cut to a predetermined width, whereby a wrapped joined V-belt having a predetermined number of wrapped V-belt portions is formed.

In the crosslinking molding treatment (vulcanization treatment), a crosslinking (vulcanization) temperature can be selected according to the type of the rubber component, and is, for example, about 120°C to 200°C, and preferably about 150°C to 180°C. The pressure in the crosslinking molding treatment (vulcanization treatment) may be, for example, about 1 MPa to 2 MPa, and preferably about 1 MPa to 1.5 MPa. In each rubber layer sheet containing the short fibers, the short fibers can be arranged (oriented) in a rolling direction by a method of performing a rolling treatment with a calender roll or the like.

The tie band precursor and each of the uncrosslinked (unvulcanized) wrapped V-belt portions (wrapped V-belt portion precursors) are joined to each other by, for example, the adhesive component adhered to the tie band precursor or the cover fabric precursor of the covered area by the adhesion treatment, and the tension rubber layer exposed in the uncovered area. For example, when a fabric subjected to a treatment of frictioning (rubbing) of a solid rubber composition is used as the tie band, the tie band precursor, the cover fabric precursor in the covered area, and the tension rubber layer exposed in the uncovered area are joined to each other by a crosslinking (vulcanization) reaction of the friction rubber composition. That is, the step of setting the tie band precursor on the unvulcanized wrapped V-belt portion includes an uncrosslinked unvulcanized belt joining step of joining the plurality of unvulcanized wrapped V-belt portions to each other via the tie band as the connecting portion. The unvulcanized belt joining step is not limited to this method, and the tie band may be formed by winding a plurality of layers of tie band rubber sheets (for example, a connection reinforcing layer sheet, a protective layer sheet, and a laminate thereof).

The number of wrapped V-belt portions in the wrapped joined V-belt may be two or more, and is, for example, 2 to 10, preferably 2 to 8, and more preferably 2 to 6. Adjacent wrapped V-belt portions may be arranged in parallel to the belt length direction, and are not limited to an aspect of being arranged at intervals as illustrated in Fig. 4 and the like, and may be arranged without intervals. In terms of productivity and the like, adjacent wrapped V-belt portions are preferably arranged at intervals. The interval between the adjacent wrapped V-belt portions is, for example, about 1.7 mm to 4.3 mm, preferably about 2 mm to 4.1 mm, and more preferably about 2.3 mm to 3.9 mm. The interval between the wrapped V-belt portions means an interval on the outer peripheral surface of the belt. The tie band is only required to be able to connect each wrapped V-belt portion, and is not limited to the aspect as illustrated in Fig. 4 and the like in which the tie band connects the wrapped V-belt portions by being in contact with and integrated with the entire outer peripheral surface of each wrapped V-belt portion, and the outer peripheral surface of the wrapped V-belt portion may have an area that does not come into contact with the tie band. In terms of belt durability, it is preferable that the entire outer peripheral surface of each wrapped V-belt portion is in contact with and integrated with the tie band.

The wrapped joined V-belt may be used in a layout with a high load and a long span (a long inter-axis distance) in a large-scale agricultural machine or the like. The width of the belt outer peripheral surface of each wrapped V-belt portion may be, for example, about 15 mm to 60 mm, and the thickness of each wrapped V-belt portion may be, for example, 10 mm to 20 mm (for example, 10 mm to 15 mm).

A belt total length of the wrapped joined V-belt may be, for example, 50 inches or more, 200 inches (508 cm) or more, or about 220 inches to 500 inches.

Since the wrapped joined V-belt is suitable for a long span layout, a maximum span length (inter-axis distance between pulleys) may be 1000 mm or more, and may be, for example, about 2000 mm to 5000 mm.

Since the wrapped joined V-belt according to the present invention is suitable for high-load applications and is therefore suitable for high-horsepower machines, and the load (reference power-transmission capacity) applied to one wrapped V-belt portion may be 10 PS or more, preferably 20 PS or more, and more preferably 22 PS or more (for example, about 22 PS to 30 PS).

The wrapped joined V-belt according to the present invention is excellent in adhesiveness (adhesion) between the wrapped V-belt portion and the tie band. The peeling force (or adhesive strength) between the wrapped V-belt portion and the tie band may be, for example, about 50 N/cm to 150 N/cm (for example, about 60 N/cm to 130 N/cm), preferably about 70 N/cm to 125 N/cm (for example, about 80 N/cm to 122 N/cm), and more preferably about 90 N/cm to 120 N/cm (for example, about 95 N/cm to 120 N/cm).

In the present application, the peeling force (or adhesive strength) between the wrapped V-belt portion and the tie band can be measured by the method described in Examples.

The wrapped joined V-belt of the present invention is excellent in wear resistance. The wear rate of the wrapped joined V-belt before and after running under predetermined conditions may be, for example, about 0.5% to 2% (for example, about 0.7% to 1.7%), preferably about 0.8% to 1.5% (for example, about 0.9% to 1.4%), and more preferably about 0.95% to 1.3% (for example, about 1% to 1.2%).

In the present application, the wear rate of the wrapped joined V-belt can be measured by the method described in Examples.

The wrapped joined V-belt according to the present invention is excellent in lateral pressure resistance. A ride-out change amount of the wrapped joined V-belt may be, for example, about 0.3 mm to 0.85 mm (for example, about 0.4 mm to 0.75 mm), preferably about 0.43 mm to 0.7 mm (for example, about 0.45 mm to 0.65 mm), more preferably about 0.48 mm to 0.6 mm (for example, about 0.49 mm to 0.55 mm), and particularly about 0.5 mm to 0.52 mm.

In the present application, the ride-out change amount of the wrapped joined V-belt can be measured by the method described in Examples.

The wrapped joined V-belt according to the present invention is excellent in durability. The durable life of the wrapped joined V-belt may be, for example, about 200 h (hours) or more (for example, about 230 h to 330 h), preferably about 240 h or more (for example, about 250 h to 325 h), more preferably about 260 h or more (for example, about 270 h to 320 h), and particularly about 280 h or more (for example, about 290 h to 315 h).

In the present application, the durable life of the wrapped joined V-belt can be measured by the method described in Examples.

### EXAMPLES

Hereinafter, the present invention will be described in more detail based on Examples, but the present invention is not limited to these Examples. The following describes the raw materials and preparation methods of the rubber composition, cord, cover fabric precursor, and connection reinforcing layer precursor used, the belt preparation method, and the measurement and evaluation methods.

### [Rubber Composition]

### [Used Materials]

EPDM 1: "Nordel IP 4520" manufactured by The Dow Chemical Company, Mooney viscosity [ML(1 + 4)125°C] of about 20, ethylene content of 50 mass%, diene content (ethylidene norbornene content) of 4.9 mass%
EPDM 2: "EPT 4045M" manufactured by Mitsui Chemicals, Inc., Mooney viscosity [ML(1 + 4)100°C] of about 45, ethylene content of 45 mass%, diene content (ethylidene norbornene content) of 7.6 mass%
Cotton short fiber: "cotton cut yarn" manufactured by Hashimoto Co., Ltd., average fiber length of 6 mm
Polyester short fiber: "PET cut yarn" manufactured by Heilongjiang Hongyu Short Fiber New Materials Co., Ltd, average fiber length of 3 mm
Carbon black SRF: "SEAST S" manufactured by Tokai Carbon Co., Ltd., DBP absorption amount of 68 mL/100 g, BET specific surface area of 27 m²/g, iodine adsorption amount of 26 g/kg
Carbon black ISAF: "SEAST 6" manufactured by Tokai Carbon Co., Ltd., DBP absorption amount of 114 mL/100 g, BET specific surface area of 119 m²/g, iodine adsorption amount of 121 g/kg
Carbon black HAF: "SEAST 3" manufactured by Tokai Carbon Co., Ltd., DBP absorption amount of 101 mL/100 g, BET specific surface area of 79 m²/g, iodine adsorption amount of 80 g/kg
Clay: "Catalpo" manufactured by Sanyou Clay Industry Co., Ltd.
Silica: "Ultrasil VN3" manufactured by Evonik Industries AG, BET specific surface area of 180 m²/g
Paraffinic oil: "Diana Process Oil PW90" manufactured by Idemitsu Kosan Co., Ltd.
Anti-aging agent MBI (2-mercaptobenzimidazole): "Nocrac MB-O" manufactured by Ouchi Shinko Chemical Industrial Co., Ltd.
Anti-aging agent ODPA (octylated diphenylamine): "Nocrac AD-F" manufactured by Ouchi Shinko Chemical Industrial Co., Ltd.
Anti-aging agent DCD (4,4'-bis(α,α-dimethylbenzyl)diphenylamine): "Nocrac CD" manufactured by Ouchi Shinko Chemical Industrial Co., Ltd.
Zinc Oxide: "Zinc oxide second grade" manufactured by Sakai Chemical Industry Co., Ltd.
Stearic acid: "Stearic acid TSUBAKI" manufactured by NOF Corporation
Crosslinking accelerator TMTD (tetramethylthiuram disulfide): "Nocceler TT" manufactured by Ouchi Shinko Chemical Industrial Co., Ltd.
Crosslinking accelerator CBS (N-cyclohexyl-2-benzothiazolylsulfenamide): "Nocceler CZ" manufactured by Ouchi Shinko Chemical Industrial Co., Ltd.
Crosslinking accelerator MBTS (2,2'-dibenzothiazolyl disulfide): "Nocceler DM" manufactured by Ouchi Shinko Chemical Industrial Co., Ltd.
Co-crosslinking agent MPBM (N,N'-m-phenylene dimaleimide): "Vulnoc PM" manufactured by Ouchi Shinko Chemical Industrial Co., Ltd.
Adhesiveness improver A (resorcinol-formaldehyde co-condensate): "Penacolite Resin (B-18-S)" manufactured by INDSPEC Chemical Corporation
Adhesiveness improver B (hexamethoxymethyl melamine): "POWERPLAST PP-1890S" manufactured by SINGH PLASTICISER & RESINS
Organic peroxide: 1,3-bis(t-butylperoxyisopropyl)benzene
Sulfur (powdered sulfur): manufactured by Miwon Chemical Co., Ltd.

### (Preparation of Uncrosslinked Rolled Rubber Sheet and Massive Uncrosslinked Rubber Composition for Friction)

Rubber compositions R1 and R2 having the formulations illustrated in Table 1 were rubber-kneaded with a Banbury mixer, and the kneaded rubber was passed through a calender roll to produce uncrosslinked (unvulcanized) rolled rubber sheets having a predetermined thickness, which were used as compression rubber layer sheets, adhesive rubber layer sheets, tension rubber layer sheets, and/or protective layer rubber sheets.

In addition, the rubber composition R1 illustrated in Table 1 was rubber-kneaded with a Banbury mixer to prepare a massive uncrosslinked (unvulcanized) rubber composition for friction for forming a cover fabric precursor.

Furthermore, the rubber composition R3 having the formulation illustrated in Table 1 was rubber-kneaded with a Banbury mixer, and the kneaded rubber was passed through a calender roll to produce an uncrosslinked (unvulcanized) rolled rubber sheet having a predetermined thickness, thereby obtaining a rubber sheet for a connection reinforcing layer for forming a tie band precursor.

**Table 1**

| Rubber composition | R1 | R2 | R3 |
|---|---|---|---|
| EPDM1 | 100 | 100 | - |
| EPDM2 | - | - | 100 |
| Cotton short fiber | - | 10 | - |
| Polyester short fiber | - | 20 | - |
| Carbon black SRF | 10 | - | - |
| Carbon black ISAF | - | 75 | - |
| Carbon black HAF | - | - | 35 |
| Clay | - | 20 | - |
| Silica | 50 | - | 20 |
| Paraffinic oil | 10 | 3 | - |
| Anti-aging agent MBI | 2 | 0.5 | - |
| Anti-aging agent ODPA | 1 | - | - |
| Anti-aging agent DCD | - | - | 2 |
| Zinc oxide | 5 | 5 | 5 |
| Stearic acid | 1 | 1 | 1 |
| Crosslinking accelerator TMTD | - | 0.5 | - |
| Crosslinking accelerator CBS | - | 1 | - |
| Crosslinking accelerator MBTS | - | 1 | 1 |
| Co-crosslinking agent MPBM | 10 | 1 | - |
| Adhesiveness improver A | - | - | 2 |
| Adhesiveness improver B | - | - | 2 |
| Organic peroxide | 5 | - | - |
| Sulfur | 0.5 | 2 | 1 |
| Total | 194.5 | 240 | 169 |

| | | | |
|---|---|---|---|
| Unit: parts by mass | | | |

### [Cord (Treated Cord)]

A treated cord, which was obtained by subjecting a twisted cord (plied cord yarn) having a total fineness of 25050 dtex (number of filaments: 15000) and a diameter of 1.9 mm to an adhesion treatment, which was produced by aligning three aramid fiber bundles having a fineness of 1670 dtex (number of filaments: 1000) and twisting them in an S direction at a twist coefficient of 3.0 to produce a primary twisted yarn, aligning five produced primary twisted yarns and twisting them in a Z direction at a twist coefficient of 3.0, was used as a cord. The twist coefficient TF is a value calculated by the following formula.$TF = TN \times D 0.5 / 960$ [In the formula, TF represents the twist coefficient, TN represents the number of twists per 1 m, and D represents the fineness (tex) of the yarn.]

### [Cover Fabric Precursor (Treated Canvas)]

As the cover fabric precursor, a canvas subjected to an adhesion treatment and friction (treated canvas) was used. That is, a canvas having a fabric weight of 280 g/m², which was plain-woven at a warp density of 75 yarns/50 mm and a weft density of 75 yarns/50 mm using a 20 s/3 (20-count, 3-ply) blended yarn obtained by blending polyester fibers and cotton as the warp and weft at a mass ratio of 50/50, was immersed in an RFL liquid (a mixed liquid of 2.6 parts by mass of resorcinol, 1.4 parts by mass of 37% formalin, 17.2 parts by mass of a vinylpyridine-styrene-butadiene copolymer latex (manufactured by Nippon Zeon Co., Ltd.), and 78.8 parts by mass of water), dried, and then subjected to a wide angle treatment such that an angle formed by the warp and the weft was 120 degrees. A treated canvas (basis weight: about 500 g/m², thickness: about 0.6 mm) obtained by rubbing (frictioning) the rubber composition R1 on both front and back surfaces of the obtained wide angle canvas was used.

### [Connection Reinforcing Layer Precursor (Treated Open-Mesh Woven Fabric)]

An open-mesh woven fabric was subjected to an adhesion treatment and a rubber sheet lamination treatment to obtain a connection reinforcing layer precursor. Specifically, an open-mesh woven fabric, which was produced using 470 dtex nylon 66 single twist cords (wire diameter: 0.22 mm) as the warp and 40-count cotton yarn (wire diameter: 0.1 mm) as the weft, with a warp density of 120 yarns/50 mm and a weft density of 5 yarns/50 mm, was immersed in an RFL liquid (a mixed liquid of 2.6 parts by mass of resorcinol, 1.4 parts by mass of 37% formalin, 17.2 parts by mass of a vinylpyridine-styrene-butadiene copolymer latex (manufactured by Nippon Zeon Co., Ltd.), and 78.8 parts by mass of water) and dried, and then a tie band rubber sheet made of the rubber composition R3 was laminated on both the front and back surfaces, resulting in treated open-mesh woven fabric (thickness: about 0.7 mm) for use.

### <Comparative Example 1 and Examples 1 to 6>

### (Preparation of Uncrosslinked Rubber Belt 1 (Tension Rubber Layer: R1))

A cord was spirally wound around an outer periphery of a compression rubber layer sheet made of the R1 (thickness: 5.4 mm) wound around an outer peripheral surface of a cylindrical drum, and a tension rubber layer sheet made of the R1 (thickness: 1.6 mm) was further laminated on the outer peripheral surface to form a cylindrical uncrosslinked sleeve in which uncrosslinked rubber layers and the cord were laminated. That is, the rubber composition R1 was exposed on the outermost peripheral surface of the uncrosslinked sleeve. The obtained uncrosslinked sleeve was cut in the circumferential direction in a state of being disposed on the outer periphery of the cylindrical drum to form an annular uncrosslinked rubber belt 1.

### (Skive Step and Cover Fabric Covering Step (Covering Step))

The uncrosslinked rubber belt 1 was removed from the drum, and both side surfaces of the uncrosslinked rubber belt were cut (skived) at a predetermined angle to form a cross-sectional shape of the uncrosslinked rubber belt into a V-shaped cross section (skive step). The uncrosslinked rubber belt having a V-shaped cross section (belt main body portion precursor: an uncrosslinked V-belt including a tension rubber layer, tension members (cords), and a compression rubber layer) was subjected to a cover winding treatment in which the periphery of the uncrosslinked rubber belt having a V-shaped cross section was covered with a cover fabric precursor to form an uncrosslinked wrapped V-belt portion 1 (covering step).

In the covering step, the cover fabric precursors having different widths were wound from the inner peripheral surface side of the uncrosslinked rubber belt such that the width direction of the cover fabric precursor was directed toward the circumferential direction in the vertical cross section in the belt length direction (that is, the length direction of the cover fabric precursor was directed toward the belt length direction), whereby the ratio of the uncovered area on the outer peripheral surface (back surface) of the wrapped V-belt portion after the connecting step (after crosslinking) was changed to the ratio illustrated in Table 2 described below. That is, in Examples 1 to 6, the cover fabric was formed into the shape illustrated in Fig. 4, and in Comparative Example 1, the cover fabric was formed into a shape as illustrated in Fig. 2 in which the cover fabric covering the inner peripheral surface was of a single layer and both end portions of the cover fabric were opposed to each other on the outer peripheral surface side.

The cover fabric precursor was arranged in a direction in which the warp and weft directions were each inclined by 60° with respect to the belt length direction.

### (Preparation of Joined V-Belt (Connecting Step))

After the obtained six uncrosslinked wrapped V-belt portions 1 were fitted into annular grooves formed in a lower side crosslinking mold, the treated open-mesh woven fabric (connection reinforcing layer precursor) and the protective layer rubber sheet made of the R1 (thickness: 1.3 mm) were set as the tie band precursor in a portion on the outer side in the radial direction. That is, when setting the tie band precursor, the treated open-mesh woven fabric and the protective layer rubber sheet were wound in this order along the circumferential direction (belt length direction) of the six uncrosslinked wrapped V-belt portions arranged in the width direction, whereby the tie band precursor was set to the six uncrosslinked wrapped V-belt portions. The treated open-mesh woven fabric was arranged such that the longitudinal direction of the warp was substantially parallel to the belt width direction and the longitudinal direction of the weft was substantially parallel to the belt circumferential direction.

The tie band precursor and the six uncrosslinked wrapped V-belt portions 1 set as described above were sandwiched between an upper side crosslinking mold and the lower side crosslinking mold, pressurized to 1.2 MPa, and crosslinked at a crosslinking temperature of 160°C to obtain a crosslinked belt 1 in which the six wrapped V-belt portions 1 (HB shape of ASABE standard, belt length of 1600 mm) were connected and joined by the tie band.

The obtained crosslinked belt 1 was cut to manufacture a wrapped joined V-belt 1 (cross-sectional dimension: width 54.6 mm × thickness 12.7 mm) having three wrapped V-belt portions 1.

### [Comparative Example 2, Examples 7 to 9, and Reference Example 1]

### (Preparation of Uncrosslinked Rubber Belt 2 (Tension Rubber Layer: R2))

A second compression rubber layer sheet made of the R1 (thickness: 3.4 mm), a first compression rubber layer sheet made of the R2 (thickness: 1.5 mm), and an adhesive rubber layer sheet made of the R1 (thickness: 0.5 mm) were laminated in this order on an outer peripheral surface of a cylindrical drum, and then the cords were spirally wound, and the adhesive rubber layer sheet made of the R1 (thickness: 0.5 mm) and a tension rubber layer sheet made of the R2 (thickness: 1.1 mm) were laminated in this order on the outer peripheral surface thereof to form a cylindrical uncrosslinked sleeve in which the uncrosslinked rubber layers and the cords were laminated. That is, the rubber composition R2 was exposed on the outermost peripheral surface of the uncrosslinked sleeve. The obtained uncrosslinked sleeve was cut in the circumferential direction in a state of being disposed on the outer periphery of the cylindrical drum to form an annular uncrosslinked rubber belt 2. In the rubber layers made of the R2 containing the short fibers, the longitudinal direction of the short fibers was arranged substantially parallel to the belt width direction.

### (Skive Step and Cover Fabric Covering Step (Covering Step))

An uncrosslinked wrapped V-belt portion 2 was formed in a manner similar to those in the skive step and the covering step of [Comparative Example 1 and Examples 1 to 6] except that the uncrosslinked rubber belt 2 was used instead of the uncrosslinked rubber belt 1, and in the covering step, the ratio of the uncovered area on the outer peripheral surface (back surface) of the wrapped V-belt portion was changed to the ratio illustrated in Table 3 described below. That is, in Examples 7 to 9, the cover fabric was formed into the shape illustrated in Fig. 4, in Reference Example 1, the cover fabric was formed into a shape as illustrated in Fig. 3 in which the cover fabric covering the inner peripheral surface was of a single layer, and in Comparative Example 2, the cover fabric was formed into a shape as illustrated in Fig. 2 in which the cover fabric covering the inner peripheral surface was of a single layer and both end portions of the cover fabric were opposed to each other on the outer peripheral surface side.

### (Preparation of Joined V-Belt (Connecting Step))

A crosslinked belt 2 in which six wrapped V-belt portions 2 (HB shape of ASABE standard, belt length of 1600 mm) were connected and joined by a tie band was obtained in a manner similar to those in the connecting step of [Comparative Example 1 and Examples 1 to 6] except that a protective layer rubber sheet made of the R2 (thickness: 1.3 mm) was used instead of the protective layer rubber sheet made of the R1 (thickness: 1.3 mm), and the longitudinal direction of the short fibers in the protective layer rubber sheet made of the R2 was arranged substantially parallel to the belt width direction.

The obtained crosslinked belt 2 was cut to manufacture a wrapped joined V-belt 2 (cross-sectional dimension: width 54.6 mm × thickness 12.7 mm) having three wrapped V-belt portions 2.

### [Examples 10 to 12]

A wrapped joined V-belt having the cross-sectional shape illustrated in Fig. 6 was manufactured by changing the number of layers of the cover fabric in Examples 4 to 6 (tension rubber layer: R1, ratio of uncovered area: 50%, 70% or 90%, number of layers of cover fabric: 1 layer) to two layers. That is, a wrapped joined V-belt having three wrapped V-belt portions 1 was manufactured in a manner similar to those as in Examples 4 to 6 except that the cover winding treatment of the cover fabric precursor was performed twice on the uncrosslinked rubber belt 1 in the covering step, and the thicknesses of the compression rubber layer sheet and the tension rubber layer sheet were adjusted to be thin with the increase in the number of layers of the cover fabric in order to align the cross-sectional dimension with those of Examples 4 to 6. In the covering step, in order to obtain the cross-sectional shape illustrated in Fig. 6, the cover winding treatment was performed such that the outer cover fabric (first cover fabric) was along the inner cover fabric (second cover fabric) (such that both the first and second cover fabrics covered the same area of the outer peripheral surface of the belt main body portion).

### [Examples 13 and 14]

A wrapped joined V-belt was manufactured in which the number of layers of the cover fabric in Example 11 (tension rubber layer: R1, ratio of uncovered area: 70%, number of layers of cover fabric: 2) was changed to three layers (Example 13) or four layers (Example 14). That is, a wrapped joined V-belt having three wrapped V-belt portions 1 was manufactured in a manner similar to that as in Example 11 except that the cover winding treatment of the cover fabric precursor was performed three or four times on the uncrosslinked rubber belt 1 in the covering step, and the thicknesses of the compression rubber layer sheet and the tension rubber layer sheet were adjusted to be thin with the increase in the number of layers of the cover fabric in order to align the cross-sectional dimension with that of Example 11. In the covering step, in order to obtain a cross-sectional shape similar to that illustrated in Fig. 6, a cover winding treatment was performed such that each cover fabric was along the adjacent cover fabric (such that all the cover fabrics covered the same area of the outer peripheral surface of the belt main body portion).

### [Examples 15 and 16]

A wrapped joined V-belt having the cross-sectional shape illustrated in Fig. 7 was manufactured by changing the ratio of the uncovered area of the inner cover fabric (second cover fabric) in the cover fabric in Examples 11 and 12 (tension rubber layer: R1, ratio of uncovered area: 70% or 90%, number of layers of cover fabric: two layers) to 100%. That is, a wrapped joined V-belt having three wrapped V-belt portions 1 was manufactured in a manner similar to those as in Examples 11 and 12 except that, in the covering step, in the first cover winding treatment, only the inner peripheral surface and both side surfaces were covered with the cover fabric precursor without covering the outer peripheral surface of the uncrosslinked rubber belt 1, and in the second cover winding treatment, both side portions of the outer peripheral surface were covered such that the ratio of the uncovered area of the outer cover fabric (first cover fabric) was 70% (Example 15) or 90% (Example 16).

### [Reference Example 2]

A wrapped joined V-belt having three wrapped V-belt portions 1 was manufactured in a manner similar to those as in Examples 15 and 16 except that the ratio of the uncovered area of not only the inner cover fabric (second cover fabric) but also the outer cover fabric (first cover fabric) was changed to 100% (even in the second cover winding treatment, the outer peripheral surface of the uncrosslinked rubber belt 1 was not covered, and only the inner peripheral surface and both side surfaces were covered with the cover fabric precursor).

### [Rubber Exposed at Side Surface of Wrapped V-Belt Portion]

In the side surfaces of the wrapped V-belt portion of the wrapped joined V-belt obtained after the connecting step (after crosslinking), the presence or absence of an area where the rubber was exposed without being covered with the cover fabric was confirmed. The results are shown in the following table.

### [Peeling Test]

The obtained wrapped joined V-belt was split along three wrapped V-belt portions (divided into three), and then the peeling force of the tie band was measured. Specifically, a 15 cm section was cut along the belt length direction from the split endless belt to serve as a peeling test sample, and after making a cut between the tie band and the wrapped V-belt portion on the cut surface with a blade, the sample was pulled with an autograph ("AGS-J10 kN" manufactured by Shimadzu Corporation) in a direction in which the tie band and the wrapped V-belt portion were separated from each other (peeling angle: 180°, that is, the tie band was folded back with respect to the wrapped V-belt portion by 180°), and the peeling force when the sample was peeled along the belt length direction was measured. The peeling force was a value per 1 cm width obtained by dividing the measured tensile force by the width of the peeled surface [the width of the outer peripheral surface of the wrapped V-belt portion (the total width of the covered area and the uncovered area)].

The peeling test samples were cut out from any three positions of the split endless belt, and an arithmetic average value of the values (peeling forces) obtained from the three samples was adopted. In addition, in a case in which an exposed portion of the rubber was seen on the side surface of the wrapped V-belt portion, the peeling test samples were cut out from any three positions in a portion (or section) where the rubber was not exposed on the side surface.

Although depending on use conditions, it is considered that peeling easily occurs when the peeling force of the tie band is less than about 50 N/cm. The results are shown in the following table and Fig. 8.

### [Ratio of Uncovered Area]

From a central portion of the wrapped V-belt portion after the peeling test (wrapped V-belt portion obtained by peeling the tie band from the peeling test sample), a 3 cm section was cut along the belt length direction to serve as an observation sample, and the peeled surface (outer peripheral surface) was observed. Specifically, the peeled surface was photographed with a microscope ("VHX-5000" manufactured by Keyence Corporation), analysis was performed with measurement software ("Stream" manufactured by Olympus Corporation) such that the uncovered area and the covered area were recognized as different areas in the photographed image, and the ratio of the uncovered area was calculated from the area ratio of each area.

The ratio of the uncovered area was calculated for each of the observation samples obtained from the three peeling test samples, and an arithmetic average value of the values (ratios of the uncovered area) obtained from the three samples was adopted. The results are shown in the following table.

### [Ride-Out Change Amount]

The wrapped joined V-belt was hung on a pair of pulleys having a diameter of 113 mm under an atmosphere of 80°C, and an axial load of 500 N was applied. The position of the back surface of the belt at this time was measured by a laser displacement meter and set as the origin (0 mm). Next, the axial load was increased to 2000 N, and the amount of change in the position of the back surface of the belt (the ride-out change amount) was measured. It can be determined that the smaller the ride-out change amount, the better the lateral pressure resistance. The results are shown in the following table.

### [Wear Rate]

As illustrated in Fig. 9, the wear resistance was measured using a biaxial running test machine including a driving (Dr.) pulley having a diameter of 180 mm and a driven (Dn.) pulley having a diameter of 180 mm. Specifically, the wrapped joined V-belt was hung over each pulley, and the belt was run for 96 hours at an ambient temperature of 23°C with an axial load of 1600 N, a driving pulley rotation speed of 1800 rpm, and a load on the driven pulley of 53 N·m. A mass of the belt before and after running was measured, and a mass change rate (wear rate) was evaluated by the following formula. It can be determined that the smaller the wear rate, the better the wear resistance. The results are shown in the following table.$Wear rate \left(%\right) = \left[\left({W}_{0} - {W}_{1}\right){/ W}_{0}\right] \times 100$ [In the formula, W₀ represents the belt mass (g) before running, and W₁ represents the belt mass (g) after running.]

### [Durable Life]

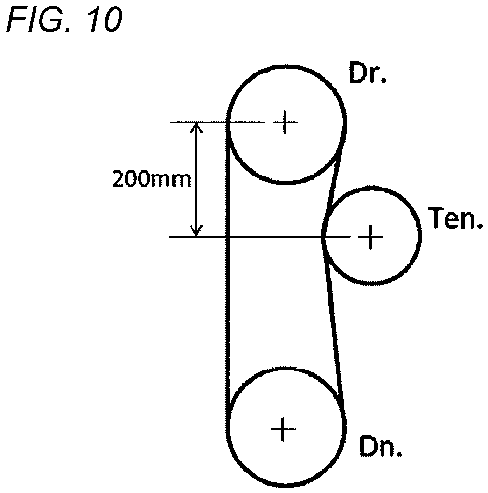

As illustrated in Fig. 10, the durable life of the wrapped joined V-belt was evaluated using a triaxial running test machine including a driving (Dr.) pulley having a diameter of 100 mm, a driven (Dn.) pulley having a diameter of 100 mm, and a back surface tension (Ten.) pulley having a diameter of 85 mm. Specifically, the wrapped joined V-belt was hung on each pulley, a contact angle of the belt with respect to the back surface tension pulley was adjusted to 20 degrees, a load of 588 N was applied to the driven pulley, the driving pulley speed was 3600 rpm, the driven pulley was unloaded, and the running time [unit: h (hour)] when the belt was run to the end of its life at an ambient temperature of 110°C was defined as the durable life. The life of the belt was the time when the tie band peeled off in a continuous section of 100 mm or more in the belt length direction. The results are shown in the following table.

**Table 2**

| Tension rubber layer: R1 | Comparative example 1 | Example 1 | Example 2 | Example 3 | Example 4 | Example 5 | Example 6 |
|---|---|---|---|---|---|---|---|
| Ratio of uncovered region [%] | 0 | 10 | 30 | 40 | 50 | 70 | 90 |
| Peeling force [N/cm] | 32.8 | 44.6 | 59.5 | 62.5 | 72.8 | 98.8 | 121.3 |
| Rubber exposed at side surface of V-belt portion | None | None | None | None | None | None | Present |
| | | | | | | | Range is small |

**Table 3**

| Tension rubber layer: R2 | Comparative example 2 | Example 7 | Example 8 | Example 9 | Reference example 1 |
|---|---|---|---|---|---|
| Ratio of uncovered region [%] | 0 | 40 | 60 | 80 | 100 |
| Peeling force [N/cm] | 31.7 | 58.8 | 73.7 | 98.4 | 107.0 |
| Rubber exposed at side surface of V-belt portion | None | None | None | None | Present |
| | | | | | Range is large |

As is clear from Tables 2 and 3 and Fig. 8, in any case of Examples 1 to 6 (tension rubber layer: R1), Examples 7 to 9, and Reference Example 1 (tension rubber layer: R2), the peeling force increased as the area ratio of the uncovered area not covered with the cover fabric with respect to the area of the entire back surface of the wrapped V-belt portion increased. However, when the area ratio of the uncovered area exceeded 80%, a portion that could not be covered with the cover fabric occurred on the side surface of the wrapped V-belt portion. When the case in which the tension rubber layer was made of the R1 and the case in which the tension rubber layer was made of the R2 were compared, the case in which the tension rubber layer was made of the R1 showed a slightly higher peeling force.

**Table 4**

| Tension rubber layer: R1 | Example 5 | Example 10 | Example 11 | Example 12 | Example 13 | Example 14 |
|---|---|---|---|---|---|---|
| Number of layers of cover fabric | 1 | 2 | 2 | 2 | 3 | 4 |
| Ratio of uncovered region [%] | 70 | 50 | 70 | 90 | 70 | 70 |
| Peeling force [N/cm] | 98.8 | 74.3 | 97.1 | 118.4 | 95.4 | 102.2 |
| Rubber exposed at side surface of V-belt portion | None | None | None | None | None | None |
| Ride-out change amount [mm] | 0.48 | 0.52 | 0.52 | 0.51 | 0.65 | 0.81 |
| Wear rate [%] | 1.0 | 1.1 | 1.1 | 1.1 | 1.2 | 1.2 |
| Durable life [h] | 267 | 277 | 296 | 305 | 279 | 250 |

As is clear from Table 4, all Examples showed a high peeling force. In addition, not only exposure of rubber on the side surface of the wrapped V-belt portion of the belt immediately after manufacturing was not observed, but also peeling of the cover fabric at the boundary portion between the side surface of the wrapped V-belt portion and the tie band could be prevented even in the belt after running (after evaluation of the wear rate and the durable life), and thus the wear rate was controlled to be low and the durable life was also excellent in all Examples.

Examples 10 to 12 are examples in which the cover fabric in Examples 4 to 6 was changed to be of two layers, and similar to Examples 4 to 6, the peeling force increased as the area ratio of the uncovered area increased. Meanwhile, in Example 6 in which the area ratio of the uncovered area was large (90%), a portion that was not covered with the cover fabric (a portion where exposure of the rubber was observed) was slightly observed on the side surface of the wrapped V-belt portion, whereas in Example 12 in which the cover fabric was of two layers, even when exposure of the rubber occurred on the side surface in the first cover winding treatment, the exposed portion could be covered in the second cover winding treatment, so that the wrapped joined V-belt portion could be manufactured without exposing the rubber from the side surface of the wrapped V-belt portion, despite the large area ratio of the uncovered area. In addition, the ride-out change amount and the wear rate of Examples 10 to 12 were about the same, but the durable life was particularly high in Examples 11 and 12 in which the area ratio of the uncovered area was large.

Examples 13 and 14 are examples in which the cover fabric in Example 5 was changed to be of three layers or four layers. When Examples 5, 11, 13, and 14 in which the numbers of layers of the cover fabric were different were compared, although the wear rate was about the same in all of Examples 5, 11, 13, and 14, the ride-out change amount tended to increase as the number of layers increased (the belt tended to drop into the pulley when tension was applied, and the lateral pressure resistance tended to decrease), and in Examples 13 and 14 (particularly, Example 14) in which the cover fabric was of three layers to four layers, the lateral pressure resistance greatly decreased. The reason for this is not clear, but it is presumed that the reason is that the ratio of the belt main body portion (hard rubber portion) harder than the cover fabric relatively decreases due to the increase in the number of layers of the cover fabric. In Examples 13 and 14 in which the lateral pressure resistance decreases as described above, when the wrapped V-belt portion was dropped toward the center of the pulley during running, the durable life tended to slightly decrease probably because a force was likely to act in a direction of peeling from the tie band.

Meanwhile, in Example 5 in which the cover fabric was of one layer, the ride-out change amount was the smallest and the lateral pressure resistance was excellent, and the peeling force and the wear rate were about the same as those in Example 11, but the durable life was more excellent in Example 11 in which the cover fabric was of two layers. The reason for this is not clear, but it is considered that in Example 5, the cover fabric was of only one layer, and therefore, even if the wear rate is about the same, the rubber of the belt main body portion is likely to be exposed or seep out from the worn portions of the cover fabric. That is, it is presumed that the friction factor between the belt and the pulley increases due to exposure or seepage of the rubber generated during belt running, and the adhesive force at the joining portion with the tie band decreases due to the accompanying large heat generation, so that the belt is easily peeled from the tie band.

Therefore, in Example 11 in which the cover fabric was of two layers, the exposure or seepage of the rubber was effectively prevented, the lateral pressure resistance was also excellent, and the durable life was the most excellent in Examples 5, 11, 13, and 14.

**Table 5**

| Tension rubber layer: R1 | Example 11 | Example 15 | Example 16 | Reference example 2 |
|---|---|---|---|---|
| Number of layers of cover fabric | 2 | 2 | 2 | 2 |
| Ratio of uncovered region of outer cover fabric (first cover fabric) [%] | 70 | 70 | 90 | 100 |
| Ratio of uncovered region of inner cover fabric (second cover fabric) [%] | 70 | 100 | 100 | 100 |
| Peeling force [N/cm] | 97.1 | 96.6 | 120.1 | 125.0 |
| Rubber exposed at side surface of V-belt portion | None | None | None | Present |
| | | | | Range is large |
| Ride-out change amount [mm] | 0.52 | 0.52 | 0.50 | 0.49 |
| Wear rate [%] | 1.1 | 1.1 | 1.1 | 2.5 |
| Durable life [h] | 296 | 315 | 322 | 180 |

Examples 15 and 16 are examples in which the ratio of the uncovered area of the inner cover fabric (second cover fabric) of the two layers of the cover fabric in Examples 11 and 12 was changed to 100%. That is, in Examples 11 and 12, the belt main body portion is covered such that the outer cover fabric (first cover fabric) and the inner cover fabric overlap each other (as illustrated in Fig. 6), whereas in Examples 15 and 16, the inner cover fabric does not cover the belt back surface as illustrated in Fig. 7, and only the outer cover fabric forms the covered area. Examples 15 and 16 showed a high peeling force, similar to Examples 11 and 12. In addition, in Examples 15 and 16, not only exposure of rubber on the side surface of the wrapped V-belt portion of the belt immediately after manufacturing was not observed, but also peeling of the cover fabric at the boundary portion between the side surface of the wrapped V-belt portion and the tie band could be prevented even in the belt after running (after evaluation of the wear rate and the durable life), and thus the wear rate was controlled to be low and the durable life was also excellent.

Also in Examples 15 and 16, similar to Examples 11 and 12, the peeling force increased as the area ratio of the uncovered area formed only by the outer cover fabric (first cover fabric) increased. In addition, in Example 16, similarly to Example 12, even when the area ratio of the uncovered area was large, the wrapped joined V-belt could be manufactured without exposing the rubber from the side surface of the wrapped V-belt portion. The ride-out change amount and the wear rate of Examples 15 and 16 were about the same, but the durable life was longer in Example 16 in which the area ratio of the uncovered area was large.

Reference Example 2 is an example in which the ratio of the uncovered area of not only the inner cover fabric (second cover fabric) but also the outer cover fabric (first cover fabric) was changed to 100%, that is, an example in which the covered area was not formed by any of the inner and outer cover fabrics. Although Reference Example 2 showed a high peeling force, the rubber was exposed on the side surface of the wrapped V-belt portion of the belt immediately after manufacturing, and the cover fabric was likely to peel off at the boundary portion between the side surface of the wrapped V-belt portion and the tie band during running (during evaluation of the wear rate and durable life), resulting in a high wear rate and a short durable life.

Among the Examples, Examples 11 and 12 and 15 and 16 were excellent in the balance of the adhesiveness to the tie band, the wear resistance, the lateral pressure resistance, the durability, the productivity, and the like, and Examples 11 and 15 in which the uncovered area was 70% were particularly excellent in that they achieved these requirements in a well-balanced manner at a high level while also being further excellent in productivity (better workability in the covering step and improved yield).

### INDUSTRIAL APPLICABILITY

The wrapped joined V-belt according to the present invention can be used for general industrial machines such as a compressor, a generator, and a pump, agricultural machines such as a combine harvester, a rice transplanter, and a mower, and the like. In addition, the present invention may be applied to a high-load machine used in a high-load and long-span layout, and examples thereof include large agricultural machines used in Europe and the United States, specifically, cultivators, vegetable transplanters, transplanters, binders, combine harvesters, vegetable harvesters, threshers, bean cutters, corn harvesters, potato harvesters, and beet harvesters.

Although the present invention has been described in detail with reference to specific embodiments, it is apparent to those skilled in the art that various modifications and changes can be made without departing from the spirit and scope of the present invention.

The present application is based on Japanese Patent Application No. 2023-195203 filed on November 16, 2023 and Japanese Patent Application No. 2024-193031 filed on November 1, 2024, and the contents thereof are incorporated herein by reference.

### REFERENCE SIGNS LIST

1, 11, 21, 31: wrapped joined V-belt
V: wrapped V-belt portion
2, 12, 22, 32: compression rubber layer
3, 13, 23, 33: tension member layer (tension member, adhesive rubber layer)
4, 14, 24, 34: tension rubber layer
4a, 14a, 24a, 34a: uncovered area
5, 15, 25, 35: cover fabric (first cover fabric or outer cover fabric)
26, 36: cover fabric (second cover fabric or inner cover fabric)
5a, 15a, 25a, 26a, 35a: covered area
T: tie band

## Claims

1. A wrapped joined V-belt comprising:
a plurality of wrapped V-belt portions each comprising a belt main body portion covered with a cover fabric, and
a tie band connecting the plurality of wrapped V-belt portions at an outer peripheral surface of each of the wrapped V-belt portions, wherein
the outer peripheral surface of each of the wrapped V-belt portions comprises a covered area that is covered with the cover fabric and an uncovered area that is not covered,
the covered area is formed on at least one side portion of the outer peripheral surface, and
the cover fabric covering the covered area also covers a side surface of each of the wrapped V-belt portions.

2. The wrapped joined V-belt according to claim 1, wherein
the covered area and the uncovered area are formed to extend in a belt length direction.

3. The wrapped joined V-belt according to claim 1 or 2, wherein
the covered area is formed on both side portions of the outer peripheral surface.

4. The wrapped joined V-belt according to any one of claims 1 to 3, wherein
an area ratio of the uncovered area with respect to an area of the outer peripheral surface of each of the wrapped V-belt portions is 25% to 95%.

5. The wrapped joined V-belt according to any one of claims 1 to 4, wherein
the belt main body portion is covered with one layer to three layers of the cover fabric.

6. The wrapped joined V-belt according to any one of claims 1 to 5, wherein
the belt main body portion is covered with a plurality of layers of the cover fabric.

7. The wrapped joined V-belt according to any one of claims 1 to 6, wherein
the belt main body portion is covered with a plurality of layers of the cover fabric,
a first cover fabric positioned on an outermost side among the plurality of layers of the cover fabric forms the covered area on the outer peripheral surface, and
one or a plurality of second cover fabrics positioned inside the first cover fabric do not cover the outer peripheral surface.

8. The wrapped joined V-belt according to any one of claims 1 to 7, wherein
the tie band comprises a fiber.

9. A manufacturing method of the wrapped joined V-belt according to any one of claims 1 to 8, the method comprising:
a covering step of covering a belt main body portion precursor with a cover fabric precursor to form a wrapped V-belt portion precursor, and
a connecting step of connecting outer peripheral surfaces of a plurality of the wrapped V-belt portion precursors obtained in the covering step with a tie band precursor, wherein
in the covering step, an inner peripheral surface and both side surfaces of each of the belt main body portion precursors are covered, at least one side portion of the outer peripheral surface is covered with the cover fabric precursor covering the side surface, and a partial area of the outer peripheral surface is not covered.

10. The manufacturing method according to claim 9, wherein
the manufacturing method does not comprise a removal step of cutting or removing the cover fabric precursor covering an outer peripheral surface side of each of the wrapped V-belt portion precursors obtained in the covering step.

11. The manufacturing method according to claim 9 or 10, wherein
in the covering step, a width of the cover fabric precursor is shorter than a perimeter length of a cross-sectional shape perpendicular to a length direction of the belt main body portion precursor, and covering is performed such that a width direction of the cover fabric precursor is directed in a direction perpendicular to a belt length direction.

12. The manufacturing method according to any one of claims 9 to 11, wherein
in the covering step, the inner peripheral surface, the both side surfaces, and at least one side portion of the outer peripheral surface of the belt main body portion precursor are at least covered with a seamless cover fabric precursor.
